(19) Europäisches Patentamt
European Patent Office
Office européen des brevets

(11) EP 4 011 982 A1

(12) EUROPEAN PATENT APPLICATION
published in accordance with Art. 153(4) EPC

(43) Date of publication:
**15.06.2022 Bulletin 2022/24**

(21) Application number: **20851455.4**

(22) Date of filing: **06.08.2020**

(51) International Patent Classification (IPC):
***C08L 101/02*** (2006.01) ***B29C 64/118*** (2017.01)
***B32B 23/04*** (2006.01) ***B32B 27/30*** (2006.01)
***B33Y 10/00*** (2015.01) ***B33Y 70/00*** (2020.01)
***B33Y 80/00*** (2015.01)

(52) Cooperative Patent Classification (CPC):
**B29C 64/118; B32B 23/04; B32B 27/30; B33Y 10/00; B33Y 70/00; B33Y 80/00; C08L 101/02**

(86) International application number:
**PCT/JP2020/030126**

(87) International publication number:
**WO 2021/029311 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2019 JP 2019147004**

(71) Applicant: **KONICA MINOLTA, INC.**
**Tokyo 100-7015 (JP)**

(72) Inventors:
- **NAKAMURA, Kazuaki**
  **Tokyo 100-7015 (JP)**
- **SHIRAISHI, Masaharu**
  **Tokyo 100-7015 (JP)**
- **GOTO, Kenji**
  **Tokyo 100-7015 (JP)**

(74) Representative: **Gille Hrabal Partnerschaftsgesellschaft mbB Patentanwälte**
**Brucknerstraße 20**
**40593 Düsseldorf (DE)**

# (54) RESIN COMPOSITION, FILAMENTOUS MATERIAL, THREE-DIMENSIONAL ADDITIVELY MANUFACTURED OBJECT, AND METHOD FOR PRODUCING THREE-DIMENSIONAL ADDITIVELY MANUFACTURED OBJECT

(57) The present invention addresses the problem of providing: a resin composition and a filamentous material for forming a three-dimensional additively manufactured object having excellent durability (strength) in external bending stress; a three-dimensional additively manufactured object produced using the filamentous material; and a method for producing the three-dimensional additively manufactured object. This resin composition is for use in forming shaped objects by a thermal fusion/extrusion method, and is characterized by comprising a resin including a polymer having a partial structure represented by general formula (1). General formula (1): $-(X)_n-J-A$ (In the general formula, X represents -C(=O)-, -C(=O)NH-, $-SiR_1R_2-$, or -S-, where $R_1$ and $R_2$ each represent a substituent, J represents a linking group, A represents a functional group, and n indicates 1 or 0.)

EP 4 011 982 A1

## Description

### Technical Field

The present invention relates to a resin composition, a filament material, a three-dimensional laminate and a method of manufacturing a three dimensional laminate using the same. More specifically, the present invention relates to a resin composition and a filament material used for forming a three-dimensional laminate excellent in durability (strength) against external stress, and a three-dimensional laminate and a method of manufacturing a three-dimensional laminate using the same.

### Background

In recent years, 3D printing (hereinafter, also referred to as "three-dimensional printing") technology using a 3D printer has attracted attention as a method for forming a three-dimensional laminate. In particular, the FDM method (Fused Deposition Modeling: also called as a hot melt lamination method) requires a plastic material with a low environmental load.

In the SLS method (Selective Laser Sintering method, powder sintering lamination modeling method), which is a method of melting powder (for example, resin particles) with a laser and laminating with a 3D printer to form a three-dimensional laminate, or in the FDM method, which is a method of melting a filament of a resin, a molten resin is laminated one layer by one layer to form a three-dimensional laminate. The temperature of the molten resin varies depending on the resin type, but is generally 150 °C or higher. However, since the formed resin temperature is 150 °C or lower at the time of laminating the next layer, there is little entanglement of the polymers between the layers. As a result, in the three-dimensional laminate, the strength in the vertical direction of the laminated surface is significantly reduced as compared with the strength in the horizontal direction. This is a problem common to both of the SLS and FDM methods.

A deposition method using a solvent between the laminates constituting the three-dimensional laminate is disclosed (see, for example, Patent Documents 1 to 3). Patent Document 1 is used for the purpose of adjusting the viscosity and dryness of an ink composition. In Patent Documents 2 and 3, a solvent is applied to dissolve a part of the surface between the laminated layers and increase the entanglement of the polymers between the layers to improve the adhesive strength between the layers.

However, in the method of strengthening the adhesiveness by simply using a solvent, the strength is obtained only by the physical entanglement between the laminates, and the polymers are simply partially intricate with each other, so that the strength has a limitation.

Further, when cellulose is applied as a constituent material of a laminate, it is known that cellulose is composed of a plant-derived raw material and has mechanical properties equivalent to those of engineered plastic, but the thermal decomposition temperature of natural cellulose is lower than the melting temperature, and melt molding is difficult. When molding by heat melting using cellulose, it is known that thermoplasticity may be imparted by introducing substituents into the hydroxy groups at the 2, 3, and 6 positions of cellulose, exemplified as cellulose esters such as cellulose acetate propionate and cellulose acetate butyrate, and cellulose ethers such as ethyl cellulose.

When considering the application of these cellulose derivatives to the FDM-type lamination modeling, the physical characteristics of the polymer alone do not always satisfy the modeling conditions, it is assumed that various additives such as plasticizers are added to control the physical characteristics of the composition. However, when various additives such as plasticizers are added, there are problems that the mechanical properties inherent to the cellulose derivative, for example, the elastic modulus strength is lowered, and the dimensional stability of the modeled body under high temperature and high humidity is deteriorated.

That is, the strength as a three-dimensional laminate is insufficient in the prior art, and a resin composition for improving the strength is strongly desired.

### Prior art Documents

### Patent Documents

Patent Document 1: Japanese Patent No. 6317791
Patent Document 2: JP-A 09-76355
Patent Document 3: JP-A 2006-1922710

## Summary of the Invention

### Problems to be solved by the Invention

The present invention has been made in view of the above problems and circumstances, and an object of the present invention is to provide a resin composition and a filament material for forming a three-dimensional laminate excellent in durability (strength) against external stress, and a three-dimensional laminate and a method of manufacturing a three-dimensional laminate using the same.

### Means to solve the Problems

In order to solve the above-mentioned problems, the present inventor has found the following in the process of examining the cause of the above-mentioned problems. That is, by using a resin composition used for forming a molded body of a hot melt extrusion method, when a resin constituting the above-mentioned resin composition has a specific partial structure, a resin composition that forms a three-dimensional laminate excellent in durability (strength) against external stress can be obtained.

In other words, the above problem according to the present invention is solved by the following means.

1. A resin composition used for forming a molded body by a hot melt extrusion method,
wherein the resin composition contains a resin including a polymer body having a partial structure represented by the following Formula (1).

**Formula** (1) $\mathbf{-(X)_n\text{-}J\text{-}A}$

In the formula, X represents -C(=O)-, -C(=O)NH-, $-SiR_1R_2-$, or -S-. $R_1$ and $R_2$ each represents a substituent. J represents a linking group. A represents a functional group. n represents 1 or 0.

2. The resin composition described in item 1, wherein A in Formula (1) represents a nitrile oxide group, a vinyl group, a thiol group, a franc ring group, a maleimide ring group, or a cinnamic acid residual.

3. The resin composition described in item 1 or 2, wherein the polymer constituting the resin is a cellulose derivative or a styrene-butadiene-acrylonitrile copolymer.

4. A filament material used for forming a molded body by a hot melt extrusion method, wherein the filament material includes the resin composition described in any one of items 1 to 3.

5. A three-dimensional laminate having two or more layers including a molded body forming material, wherein at least one layer among the layers including the molded body forming material includes the resin composition described in any one of items 1 to 3.

6. The three-dimensional laminate described in item 5, wherein all of the layers including the molded body forming material are layers including the resin composition described in any one of items 1 to 3.

7. A method of manufacturing a three-dimensional laminate described in item 5 or 6 by a hot melt extrusion method, comprising at least the steps of:

    forming a first molded body;
    forming a second molded body;
    laminating the second molded body on the first molded body to form a laminate body; and
    applying a curing treatment to the laminate body.

### Effects of the Invention

According to the above-mentioned means of the present invention, it is possible to provide a resin composition and a filament material for forming a three-dimensional laminate excellent in durability (strength) against external stress, and a three-dimensional laminate and a method of manufacturing a three-dimensional laminate using the same.

The expression mechanism or action mechanism of the effect of the present invention is not clarified, but is inferred as follows.

In the present invention, by laminating a resin composition having a specific partial structure having a functional group capable of forming a covalent bond with a skeleton of the resin by heat at around 100 °C or light in the ultraviolet region (for example, a nitrile oxide group, a vinyl group, a thiol group, a furan ring group, a maleimide ring group, or a cinnamic acid residue) to form a three-dimensional laminate, it has been found that the adhesion and strength between the laminated layers are improved even when stress is applied from the outside of the laminate.

The method of improving the adhesive strength by using the solvent proposed in Patent Documents 1 to 3 is

a method of improving the strength only by physical entanglement. However, between the laminated layers, the polymers are only partially intertwined to form a physically bonded portion, and there is a limit in durability when subjected to a strong stress.

The present invention is a method of strengthening an interface between laminations by a covalent bond which is a chemical bond by using a resin having a partial structure that forms a covalent bond. As a method thereof, a functional group which forms a covalent bond is introduced into a polymer body constituting a laminate.

As a covalent bond strengthening method, it has been found that a reaction of a nitrile oxide group which reacts with a double bond site capable of forming a covalent bond by heat at around 100 °C without a catalyst, an ene-thiol reaction which forms a sulfide bond by a double bond site and a thiol group, a Diels-Alder reaction using a furan site and a maleimide site which close at around 100 °C and open at around 150 °C, and a method of dimerizing by light of cinnamic acid which forms a covalent bond by light in the ultraviolet range are effective.

**Embodiments to carry out the Invention**

The resin composition of the present invention is a resin composition used for forming a molded body of a thermal melt extrusion type, wherein the resin constituting the resin composition is a resin including a polymer body having a partial structure represented by the above Formula (1). This feature is a technical feature common to or corresponding to the embodiments described below.

According to an embodiment of the present invention, from the viewpoint of the effect expression of the present invention, as A in Formula (1), as long as it is a functional group capable of forming a covalent bond by heat near 100 °C or light in ultraviolet region, there is no particular limitation, it may be a nitrile oxide group, a vinyl group, a thiol group, a furan ring group, a maleimide ring group, or a cinnamic acid residue. Covalent bonding between layers using these functional groups provides superior strength against external stresses between laminates when forming a three-dimensional laminate without delamination.

Further, it is preferable to apply a cellulose derivative or a styrene-butadiene-acrylonitrile copolymer as a polymer constituting the resin in view of further exhibiting the object effect of the present invention.

In the present invention, a filament material used for forming a molded body of a hot melt extrusion method is characterized in that it is constituted by the resin composition of the present invention.

In addition, in the three dimensional laminate having 2 or more layers containing a molded body forming material, at least one layer of the layers containing the molded body forming material may contain the resin composition of the present invention, and all of the layers containing the molded body forming material may contain the resin composition of the present invention.

The method for manufacturing a three-dimensional laminate is a method for manufacturing a three-dimensional laminate of the present invention by a hot melt extrusion method, and includes at least a step of forming a first molded body, a step of forming a second molded body, a step of laminating the second molded body on the first molded body to form a laminate body, and a step of performing a curing treatment on the laminate body.

Hereinafter, detailed descriptions will be given of the present invention, its constituent elements, and forms and modes for carrying out the present invention. In the present application, "to" is used in the meaning that the numerical values described before and after "to" are included as a lower limit value and an upper limit value.

<<Resin composition>>

In the resin composition of the present invention, a resin composition used for forming a molded body of a thermal melt extrusion type is characterized in that a resin constituting the resin composition is a resin obtained by bonding a functional group having a partial structure represented by the following Formula (1) to a polymer body. The resin composition referred to in the present invention refers to a configuration containing various additives, for example, a plasticizer, an ultraviolet absorber, and an antioxidant, if necessary, in addition to a resin having a partial structure represented by Formula (1) (hereinafter, also referred to as a resin component).

In addition, in the present invention, a polymer material having a partial structure represented by Formula (1) is referred to as a "polymer" (or also referred to as a "mother nucleus"), and examples thereof include a cellulose derivative and a styrene-butadiene-acrylonitrile copolymer.

[Resin having a partial structure represented by Formula (1)]

First, a resin having a partial structure represented by the following Formula (1) will be described.

**Formula (1)** $\mathbf{-(X)_n-J-A}$

In the above Formula (1), X represents -C(=O)-, -C(=O)NH-, -$SiR_1R_2$-, or -S-. $R_1$ and $R_2$ each represents a substituent. J represents a linking group. A represents a functional group. n represents 1 or 0.

Substituents represented by $R_1$ and $R_2$ include various substituents and are not particularly limited. Specific examples thereof include groups of alkyl, aryl, anilino, acylamino, sulfonamide, alkylthio, arylthio, alkenyl, cycloalkyl, cycloalkenyl, alkynyl, heterocyclic, aryloxy, siloxy, amino, alkylamino, imide, ureide, sulfamoylamino, alkoxycarbonyl, aryloxycarbonyl, heterocyclicthio, thiouride, hydroxy, mercapto, spiro compound residue, bridge hydrocarbon residue, sulfonyl, sulfinyl, sulfonyloxy, sulfamoyl, phosphoryl, carbamoyl, acyl, acyloxy, oxycarbonyl, carboxyl, cyano, nitro, halogen substituted alkoxy, halogen substituted aryloxy, pyrrolyl and tetrazolyl, and a halogen atom.

As the above-mentioned alkyl group, alkyl groups having 1 to 32 carbon atoms are preferable, and it may be straight chain or branched. As the aryl group, a phenyl group is preferred.

The acylamino group include an alkylcarbonylamino group and an arylcarbonylamino group; the sulfonamide group include an alkylsulfonylamino group and an arylsulfonylamino group; examples of the alkyl component and the aryl component in the alkylthio group and the arylthio group include the above-mentioned alkyl group and aryl group.

As the above alkenyl group, those having 2 to 32 carbon atoms, and as the cycloalkyl group, those having 3 to 12 carbon atoms, particularly 5 to 7 carbon atoms are preferred, and the alkenyl group may be straight or branched. As the cycloalkenyl group, those having 3 to 12 carbon atoms, particularly 5 to 7, are preferred.

As the above-mentioned ureido group, they are an alkylureido group and an arylureido group; as a sulfamoylamino group, they are an alkylsulfamoylamino group and an arylsulfamoylamino group; as a heterocyclic group, a 5-to 7-membered one is preferable, examples include a 2-furyl group, a 2-thienyl group, a 2-pyrimidinyl group, and a 2-benzothiazolyl group; as a heterocyclic oxy group, examples include a 3,4,5,6-tetrahydropyranyl-2-oxy group and a 1-phenyltetrazole-5-oxy group; as a heterocyclic thio group, preferred is a 5 to 7 membered heterocyclicthio group, examples include a 2-pyridylthio group, 2-benzothiazolylthio group, and a 2,4-diphenoxy-1,3,5-triazole-6-thio group; as a siloxy group, examples include a trimethylsiloxy group, a triethylsiloxy group, and a dimethylbutylsiloxy group; as an imide group, examples include a succinimide group, a 3-heptadecylsuccinimide group, phthalimide group, and a glutarimide group; examples of the spiro compound residue include spiro[3.3]heptanoic-1-yl; and examples of the bridged hydrocarbon compound residue include bicyclo[2.2.1]heptanoic-1-yl, tricyclo[3.3.1.3.7]decanoic-1-yl, and 7,7-dimethyl-bicyclo[2.2.1]heptanoic-1-yl.

As the above-mentioned sulfonyl group, they are alkylsulfonyl, arylsulfonyl, and halogen substituted arylsulfonyl; as sulfinyloxy groups, they are alkylsulfonyloxy, and arylsulfonyloxy; as sulfamoyl groups, they are N,N-dialkylsulfamoyl, N-N-diarylsulfamoyl, and N-alkyl-N-arylsulfamoyl; as phosphoryl groups, they are alkoxyphosphoryl, alkylphosphoryl, and arylphosphoryl; as carbamoyl groups, they are N,N-dialkylsulbamoyl, N,N-diarylsulbamoyl, and N-alkyl-N-arylcarbamoyl; acyl groups include alkylcarbonyloxy; as oxycarbonyl groups, they are alkoxycarbonyls and aryloxycarbonyls; halogen-substituted alkoxy groups include $\alpha$-halogen-substituted alkoxy; halogen-substituted aryloxy groups include tetrafluoroaryloxy and pentafluoroaryloxy; pyrrolyl groups include 1-pyrrolyl; and tetrazolyl groups include 1-tetrazolyl.

In addition to the above-mentioned substituents, a trifluoromethyl group, a hemptafluoroysopropyl group, a nonylfluoro-t-butyl group, a tetrafluoroaryl group, and a pentafluoroaryl group are also preferably used.

These groups may further include substituents of diffusion resistant groups such as long chain hydrocarbon groups and polymer residues. These substituents may also be further substituted with one or more substituents.

In the above Formula (1), J represents a linking group. Examples of the linking group include alkylene groups (e.g., methylene, 1,2-ethylene, 1,3-propylene, 1,4-butylene, cyclohexane-1,4-diyl), alkenylene groups (e.g., ethene-1,2-diyl, butadiene-1,4-diyl), alkynylene groups (e.g., ethylene-1,2-diyl, butane-1,3-indi-1,4-diyl), linked groups derived from compounds containing at least one aromatic group (e.g., substituted or unsubstituted benzene, fused polycyclic hydrocarbons, aromatic heterocycles, aromatic hydrocarbon ring assemblies, aromatic heterocyclic assemblies), hetero-atom linking groups (oxygen, sulfur, nitrogen, silicon nitride, phosphorus atoms,), but are preferably groups linked with alkylene groups, arylene groups. These linking groups may be further substituted by the above substituents, and the linking groups may be combined to form a composite group.

Further, as the functional group represented by A, a nitrile oxide group, a vinyl group, a thiol group, a furan ring group, a maleimide ring group, or a cinnamic acid residue is preferable.

[Polymer]

There is no particular limitation on the polymer constituting the resin having a partial structure represented by Formula (1), and examples are the following: polyethylene, polypropylene, polyvinyl chloride, polystyrene, polyvinyl acetate, polyurethane, polytetrafluoroethylene, styrene-butadiene-acrylonitrile resin (ABS resin), acrylonitrile-styrene resin (AS resin), acrylic resins such as polymethyl methacrylate (PMMA), polyamide, polyacetal, polycarbonate, modified polyphenylene ethers, polyethylene terephthalate, glass fiber reinforced polyethylene terephthalate, polyester such as polybutylene terephthalate, cyclic polyolefins, polyphenylene sulfide, polytetrafluoroethylene, polyethersulfone, amorphous polyarylate, liquid crystal polymer, polyetherketone, polyimide, polyamideimide, and polylactic acid. There is no

particular limitation as long as it is a thermoplastic resin, but in the present invention, the polymer is preferably a cellulose derivative or a styrene-butadiene-acrylonitrile copolymer, and more preferably a cellulose derivative.

In the present invention, the cellulose derivative has a structure in which the hydroxy group in the cellulose structure is substituted with an acetyl group, a propionyl group, a butanoyl group, a methyl group, an ethyl group, or a propyl group. Specific examples include cellulose acetate, cellulose acetate propionate, cellulose acetate butyrate, methyl cellulose, ethyl cellulose, and propyl cellulose.

In the resin composition of the present invention, as a cellulose suitable as a polymer having a partial structure represented by Formula (1) (hereinafter, an unsubstituted cellulose is also referred to as a cellulose mother nucleus, and a substituted cellulose is also referred to as a cellulose derivative), a wood pulp or a cotton linter may be used, and a wood pulp may be a softwood or a hardwood, but a softwood is more preferred. From the viewpoint of peelability in the manufacturing process, cotton linter is preferably used.

Examples of the substituent other than the group having a partial structure represented by Formula (1) introduced into cellulose include a cellulose ether having a straight or branched chain alkyl group having 1 to 5 carbon atoms introduced thereinto from the viewpoint of melt molding, and a cellulose ester having an organic acid having about 3 to 7 atoms, such as acetic acid, propionic acid, butyric acid, isobutyric acid, valeric acid, isovaleric acid, 2-methylbutyric acid, and pivalic acid. In the cellulose ether, an ethyl group and a propyl group are preferable, and more preferred is an ethyl group. In addition, in the cellulose ester, acetic acid, propionic acid, butyric acid, isobutyric acid, and pivalic acid are preferable, and more preferred is acetic acid, propionic acid, and butyric acid. Most preferred among the above cellulose derivatives is cellulose acetate propionate which is a cellulose ester substituted with acetic acid and propionic acid.

There is no particular limitation to the cellulose acetate propionate as long as it can be melt-molded, and when the degree of substitution of the acetyl group of cellulose acetate propionate is X, the degree of substitution of the propionyl group is Y, and the degree of substitution of the group having a partial structure represented by Formula (1) is Z, and the cellulose derivative preferably satisfies the following Expressions (1), (2) and (3) from the viewpoint of molding.

$$\text{Expression (1):} \quad 2.0 \le X + Y + Z \le 3.0$$

$$\text{Expression (2):} \quad 0.3 \le Y \le 2.5$$

$$\text{Expression (3):} \quad 0.1 \le Z \le 0.5$$

When the degree of substitution Z of the group having a partial structure represented by Formula (1) is less than 0.1, the number of substituents present on the surface of the molded body is small, and covalent bond formation between the molded body surfaces is not sufficient, and good strength cannot be obtained. Further, when the degree of substitution exceeds 0.5, decrease in strength of the entire molded body is caused, and a desired physical property cannot be obtained. Therefore, the range of the above Expression (3) is preferred, and more preferably, $0.15 \le Z \le 0.3$.

The method for measuring the degree of substitution of the above acyl group may be measured according to ASTM-D817-96.

The weight average molecular weight Mw of the cellulose derivative is preferably in the range of 80000 to 300000, and more preferably in the range of 120000 to 250000, from the viewpoint of controlling the elastic modulus and the dimensional stability. In the present invention, it is easy to control the elastic modulus at the time of lamination modeling in the FMD method, and dimensional stabilization of the three-dimensional laminate and bleed out resistance of the additive are improved.

The number average molecular weight (Mn) of the cellulose derivative is preferably in the range of 30000 to 150000 because the obtained three-dimensional laminate has high mechanical strength. In addition, cellulose derivatives within the range of 40000-100000 are preferably employed.

The value of the ratio (Mw/Mn) of the weight average molecular weight (Mw) and the number average molecular weight (Mn) of the cellulose derivative is preferably within a range of 1.4 to 3.0.

The weight average molecular weight Mw and the number average molecular weight Mn of the cellulose derivative may be measured using gel permeation chromatography (GPC).

The cellulose derivative according to the present invention may be produced by a known method. Generally, cellulose of a raw material is mixed with a predetermined organic acid (acetic acid and propionic acid) and an acid anhydride (acetic anhydride and propionic anhydride), and a catalyst (sulfuric acid) to esterify cellulose, and the reaction proceeds until a triester of cellulose is formed. In the triester, the three hydroxy groups of the glucose unit are replaced

by the acyl acid of the organic acid. When 2 kinds of organic acids are used at the same time, a cellulose ester of a mixed ester type, for example, cellulose acetate propionate or cellulose acetate butyrate may be produced. Then, a cellulose ester having a desired acyl substitution degree is synthesized by hydrolyzing a triester of cellulose. Thereafter, a cellulose derivative is formed through a step such as filtration, precipitation, water washing, dehydration, and drying.

The cellulose derivative according to the present invention may be specifically synthesized with reference to the method described in JP-A 10-45804 and JP-A 2017-170881.

In the present invention, when the polymer is a cellulose derivative, it has a partial structure represented by Formula (1) according to the present invention as a substituent at the 3 position, the 4 position, or the 6 position of the cellulose structure.

In addition, when a styrene-butadiene-acrylonitrile copolymer (abbreviation: ABS resin) is applied as a polymer, the molar ratio of butadiene in the ABS resin is preferably 1 to 50%, more preferably 3 to 40%, and still more preferably 5 to 30%. Further, it is preferable that the partial structure represented by Formula (1) according to the present invention is introduced into the double bond of butadiene of the ABS matrix in a range of 20 to 80%, and more preferably within a range of 40 to 60%.

[Specific examples of the resin]

Hereinafter, exemplified compounds 1 to 118 are shown as specific examples of resins including a polymer body having a partial structure represented by Formula (1) according to the present invention, but the present invention is not limited only to these exemplified compounds. Note that "Cellulose" described in each of the following exemplified compounds represents that a polymer constituting a resin is a cellulose derivative, and "ABS" represents that a polymer is a styrene-butadiene-acrylonitrile copolymer.

1

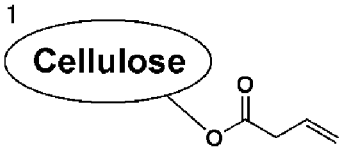

2

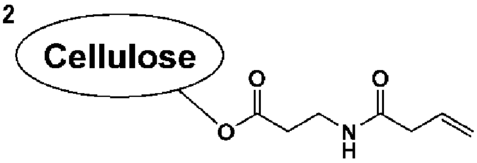

3

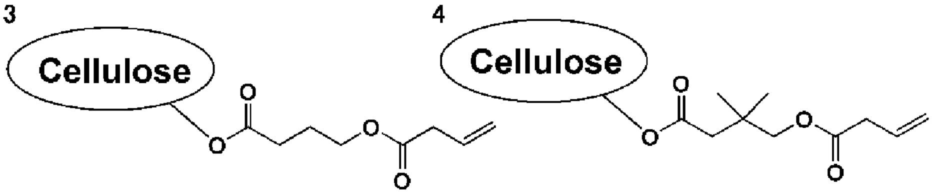

4

5

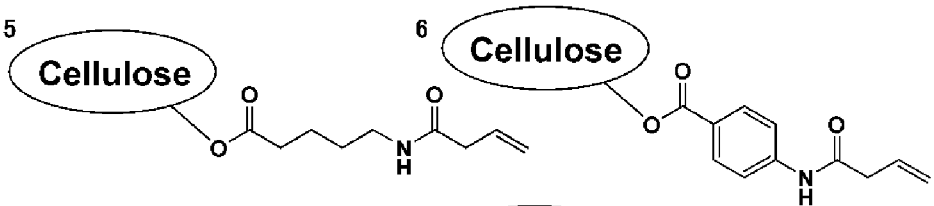

6

7

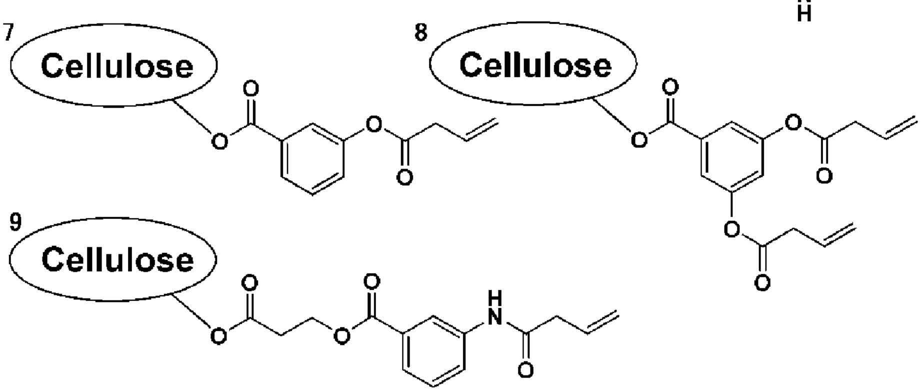

8

9

10

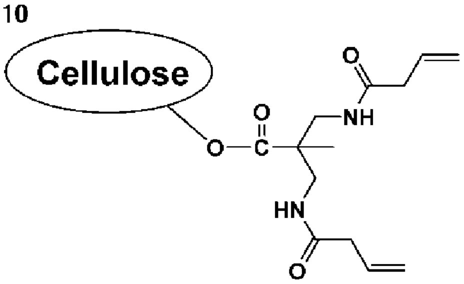

11

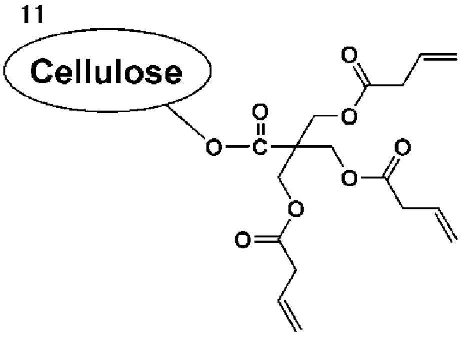

12

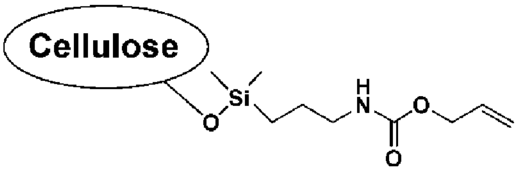

13

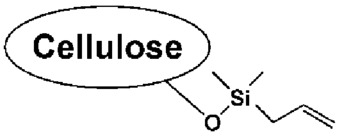

14

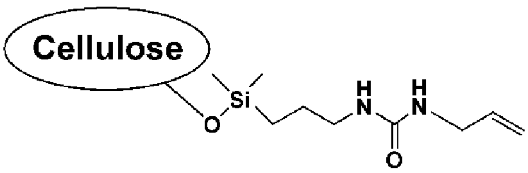

15

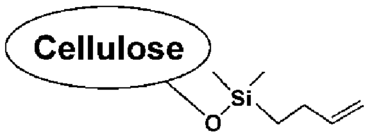

16

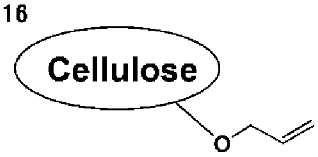

17

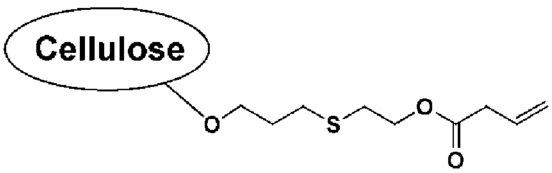

18

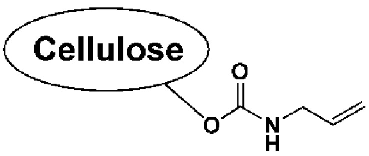

19

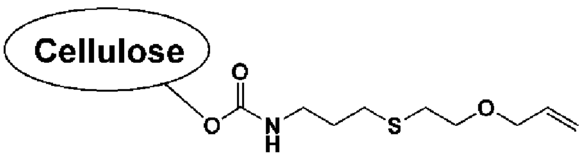

20

21

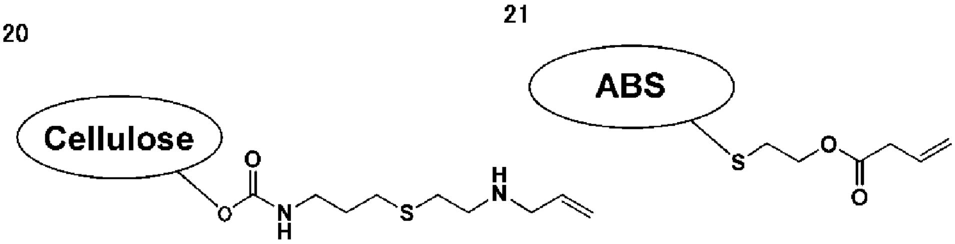

22

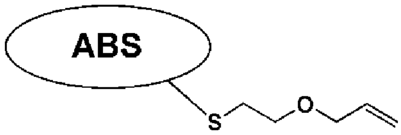

23

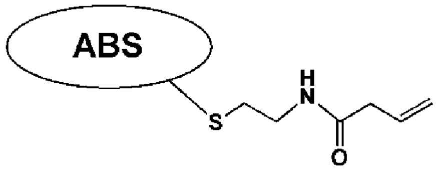

24

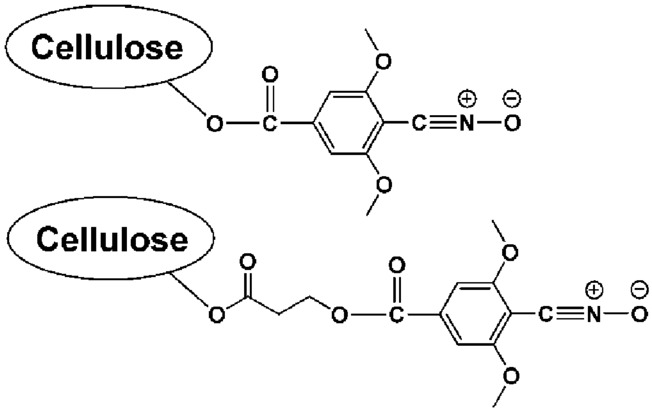

25

26

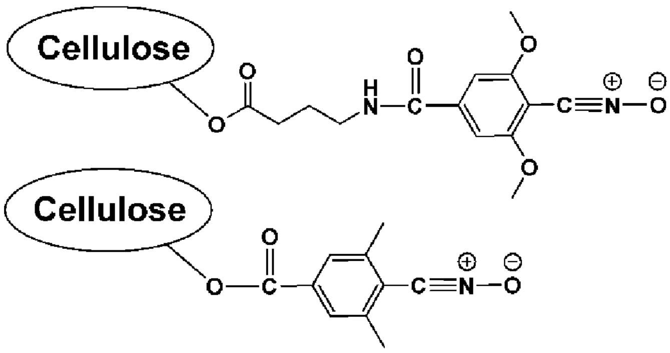

27

28

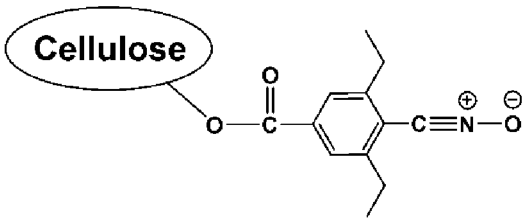

29

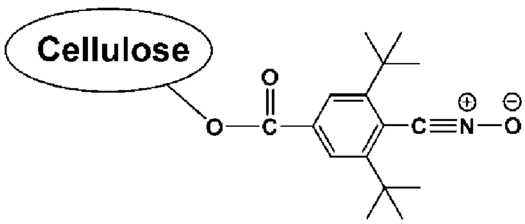

30

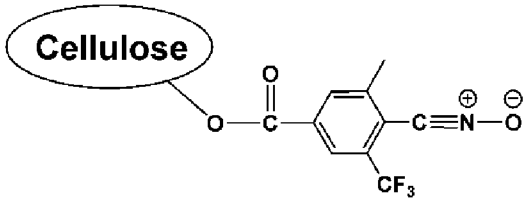

31

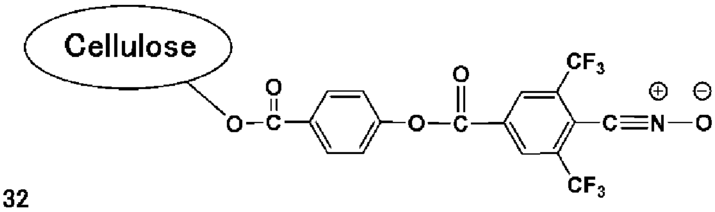

32

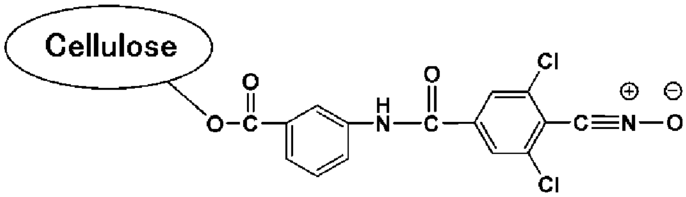

33

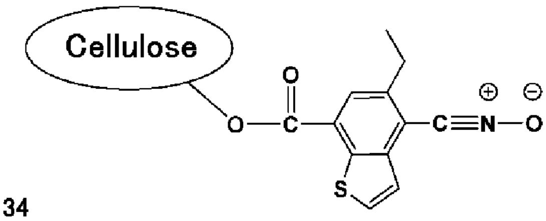

34

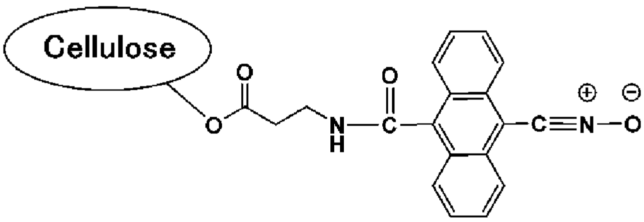

35

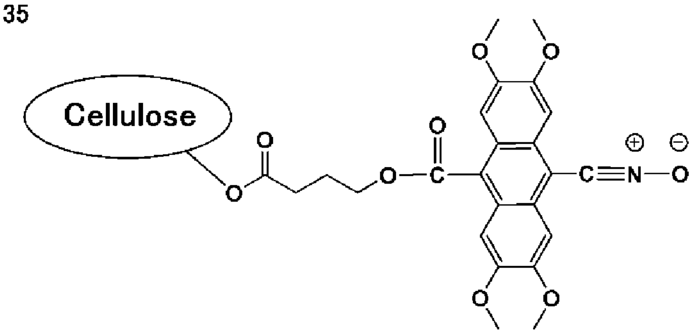

36

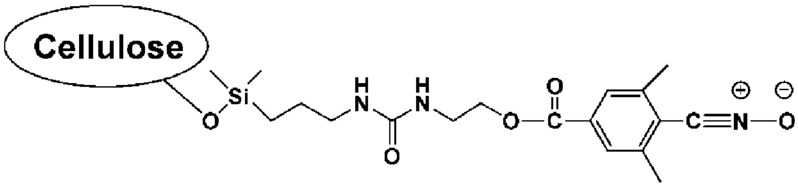

37

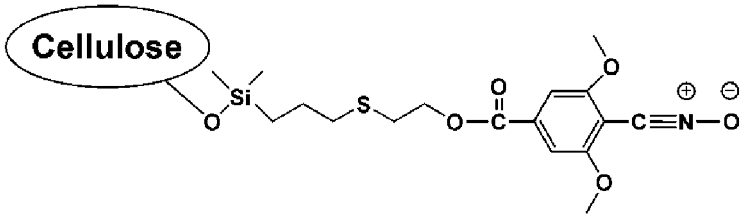

38

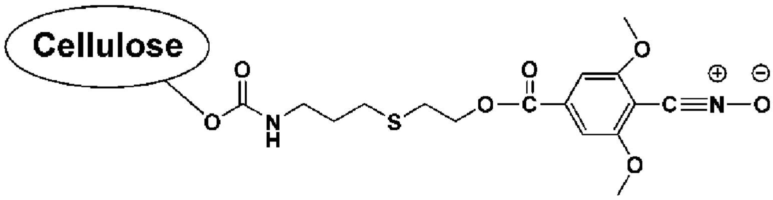

39

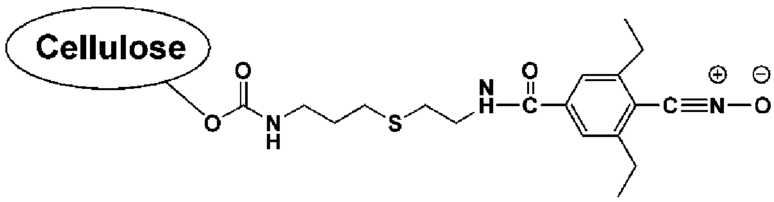

40

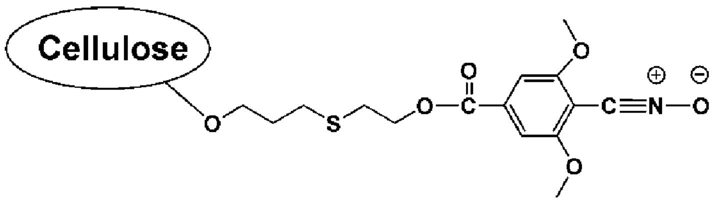

41

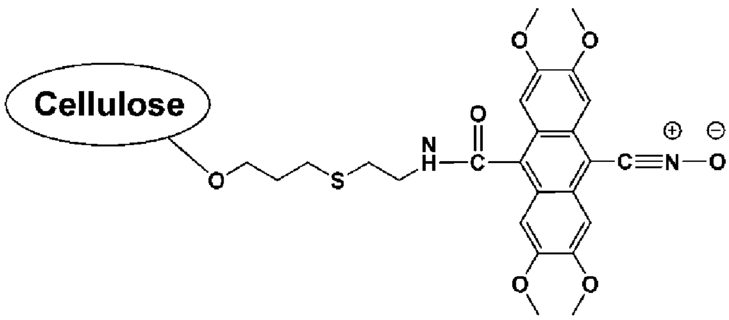

42

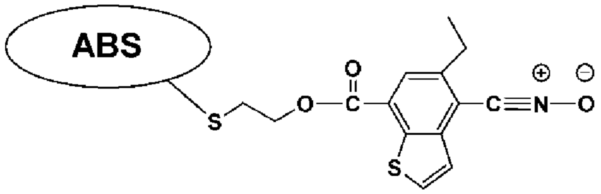

43

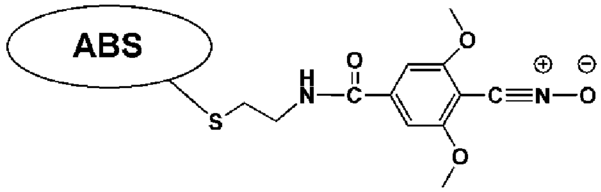

44

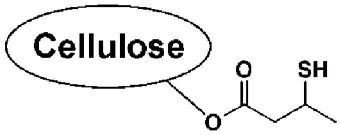

45

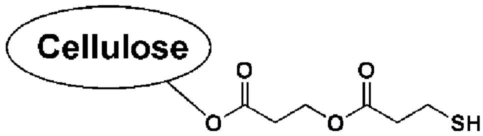

46

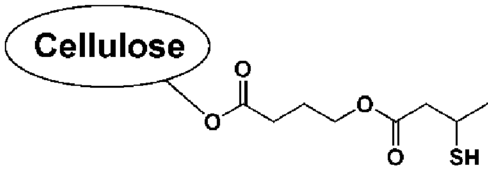

47

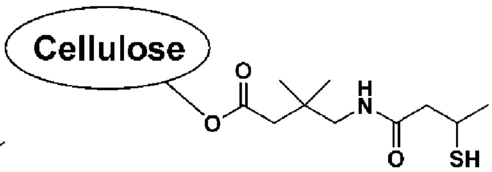

48

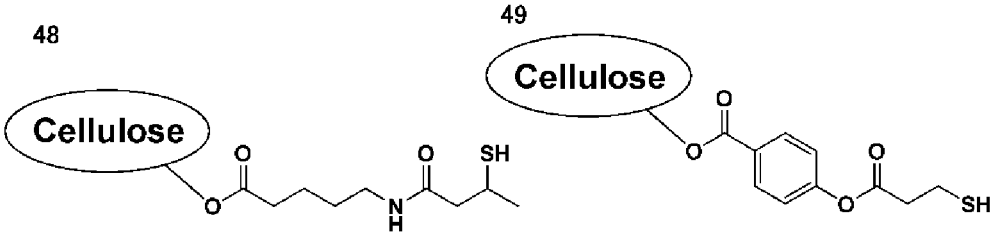

49

50

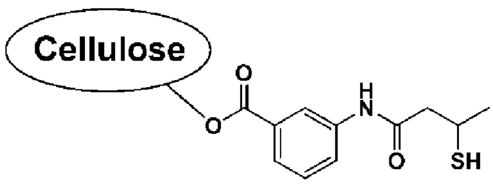

51

52

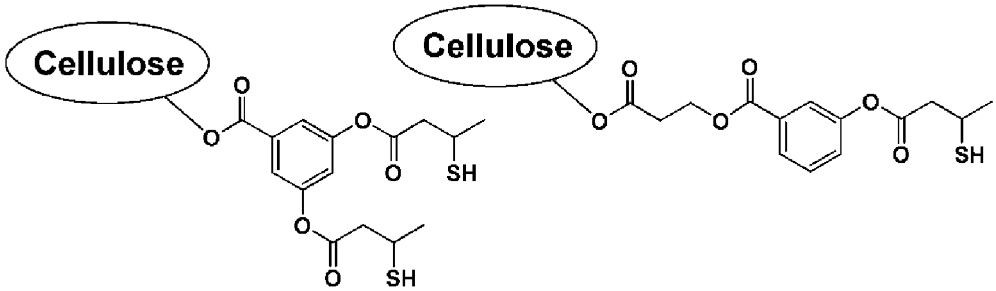

53

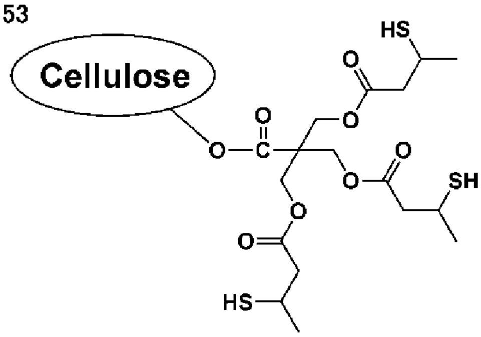

54

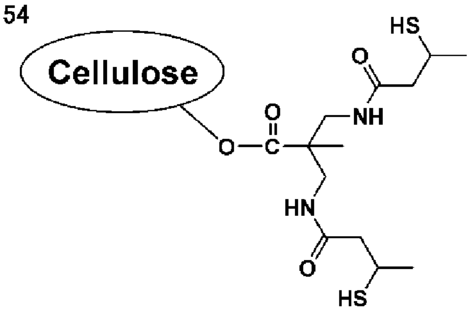

55

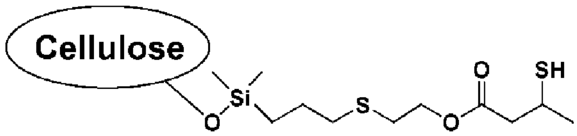

56

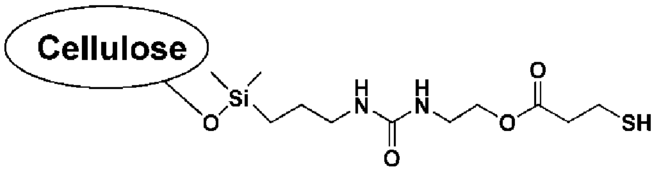

57

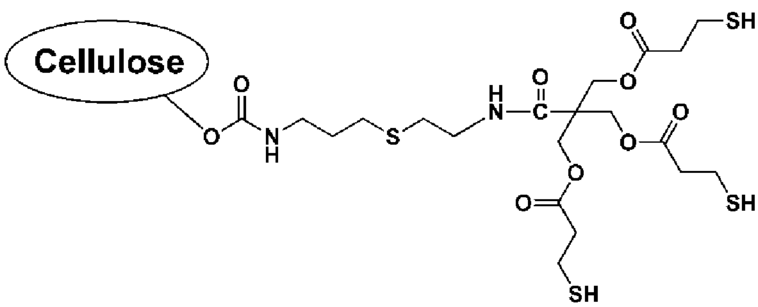

58

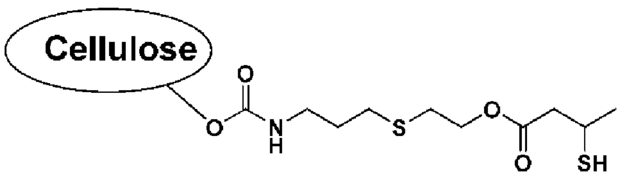

59

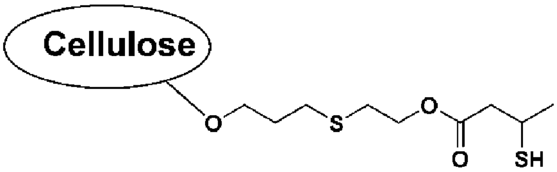

60

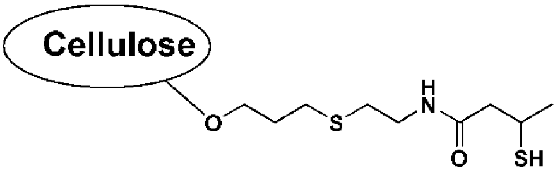

61

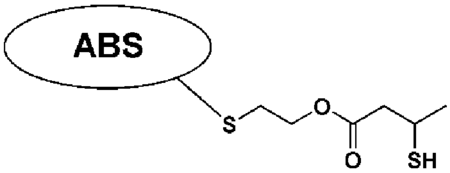

62

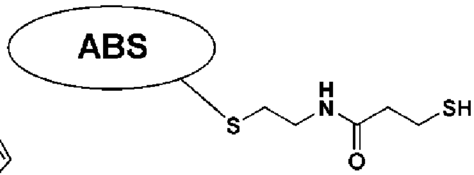

63

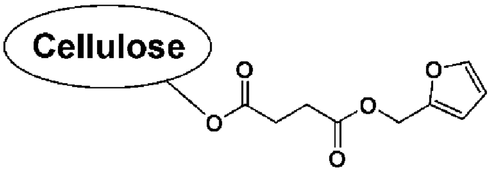

64

65

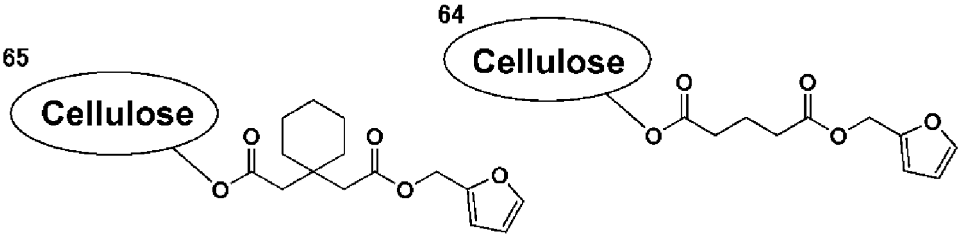

66

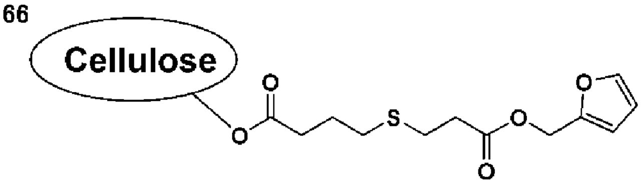

67

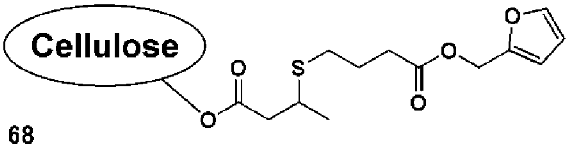

68

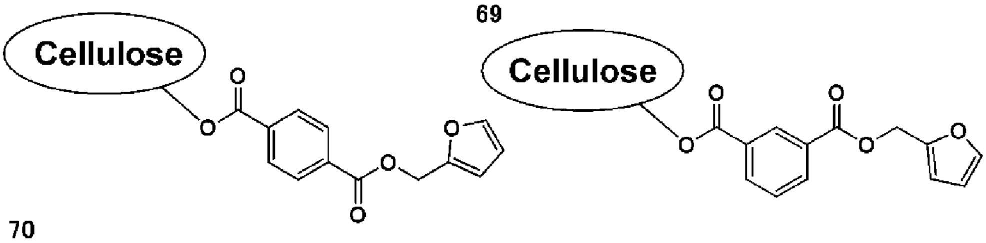

69

70

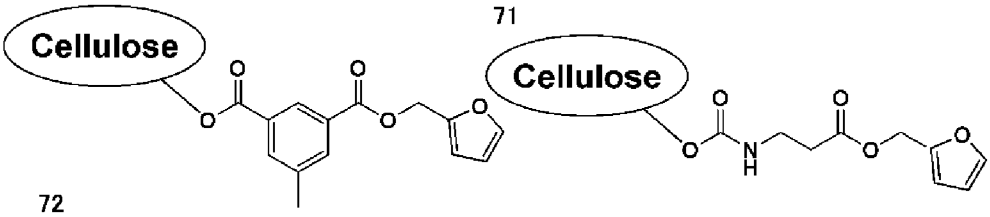

71

72

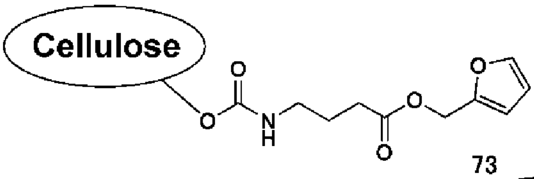

73

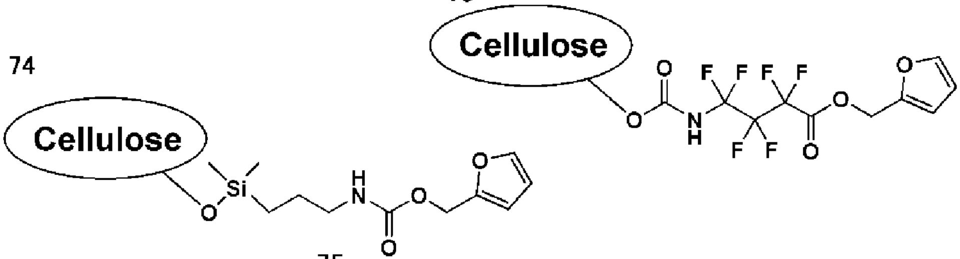

74

75

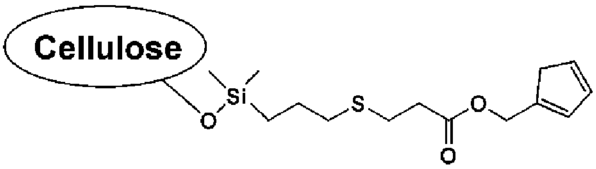

76

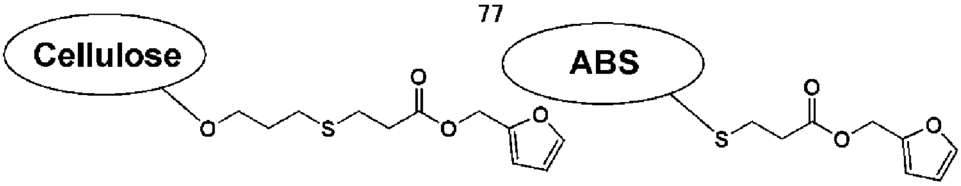

77

78

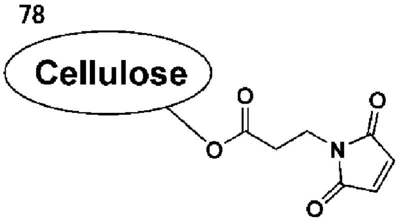

79

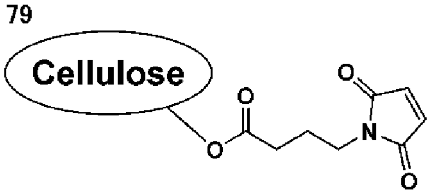

80

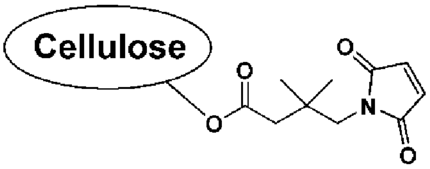

81

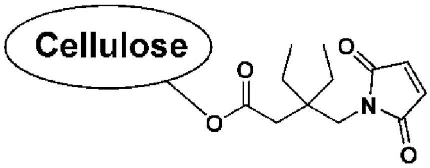

82

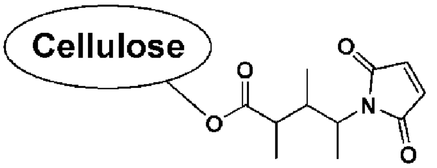

83

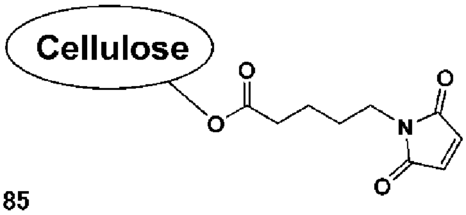

84

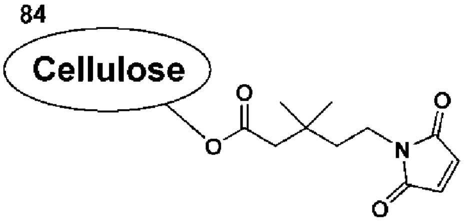

85

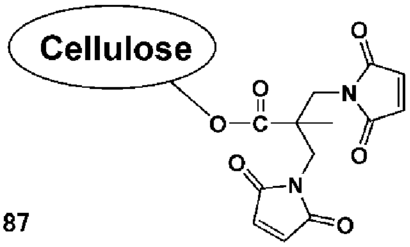

86

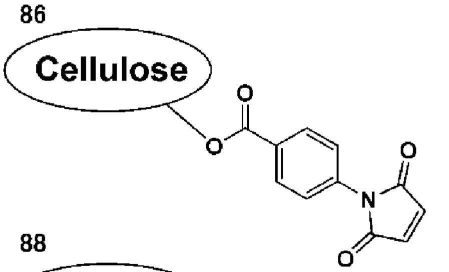

87

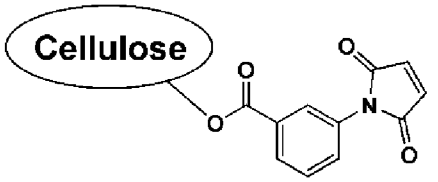

88

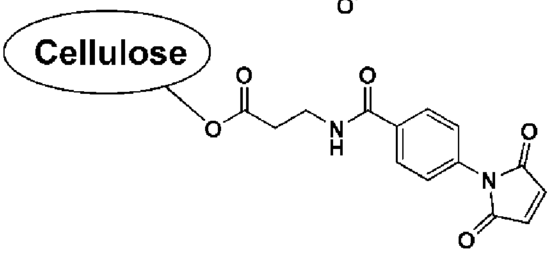

89

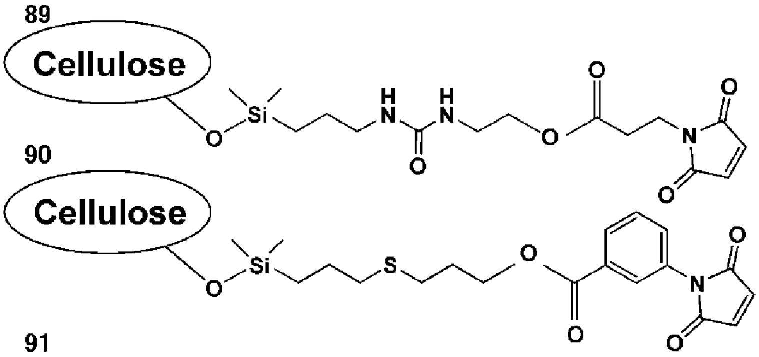

90

91

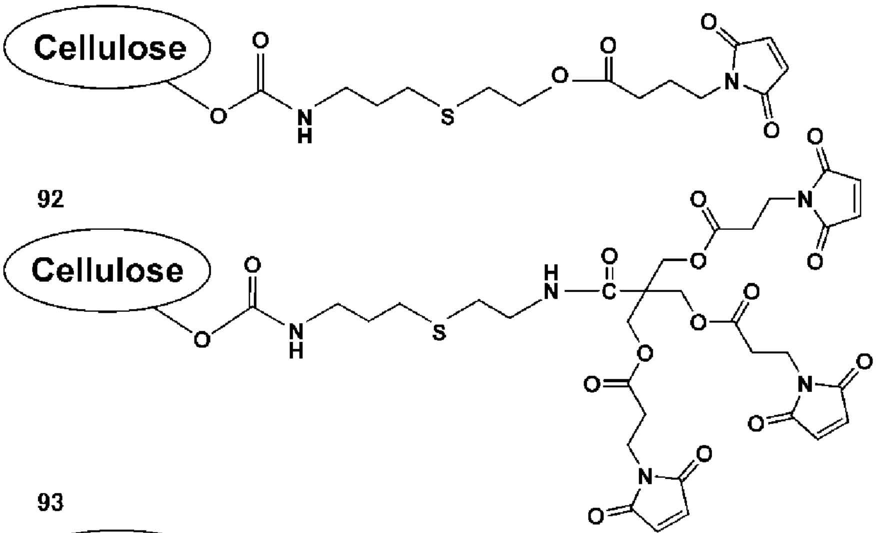

92

93

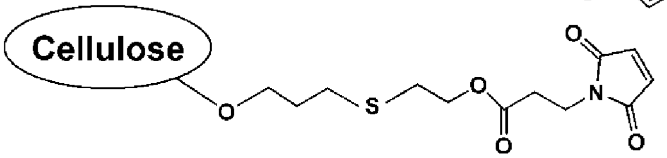

94

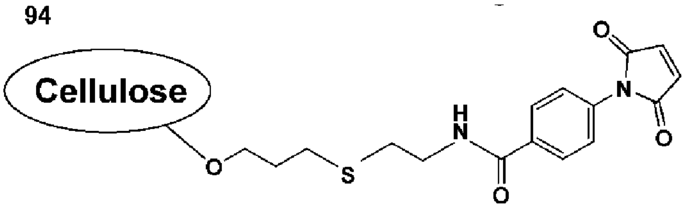

95

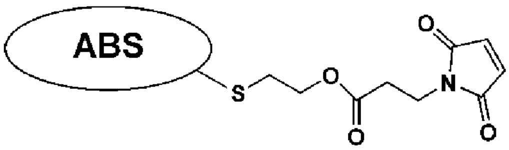

96

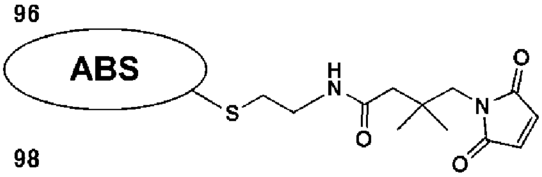

97

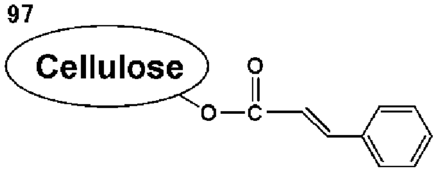

98

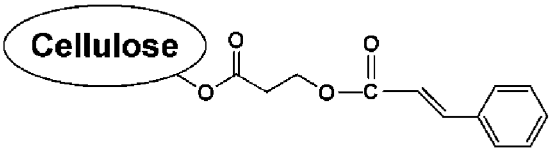

99

100

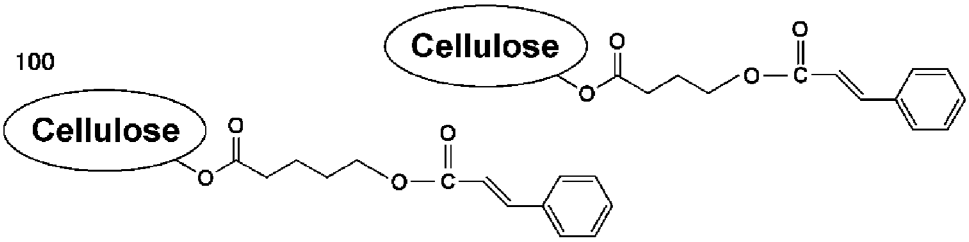

101

102

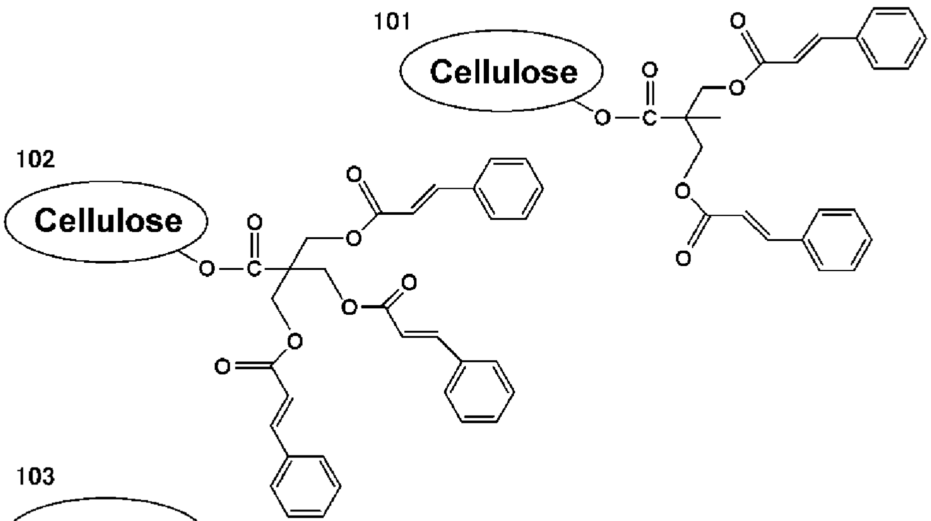

103

104

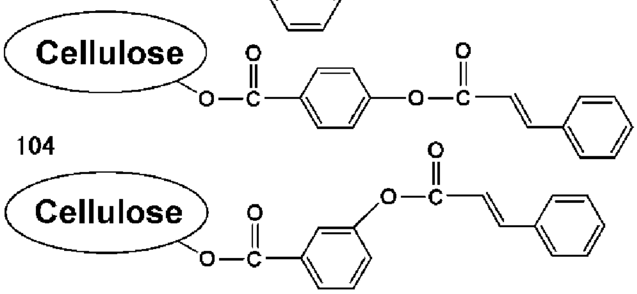

105

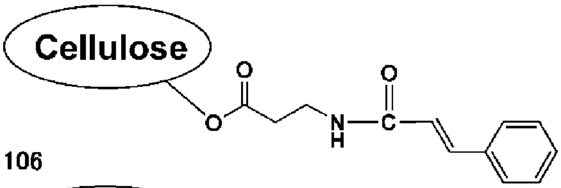

106

107

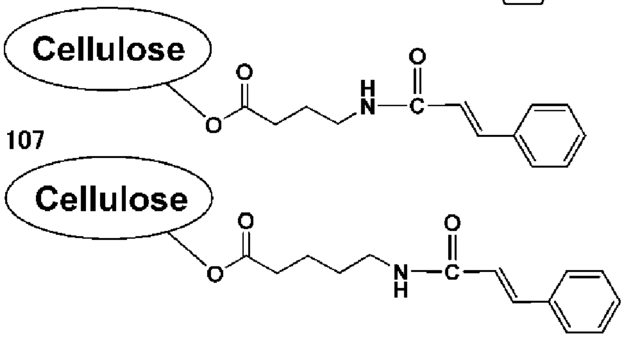

108

109

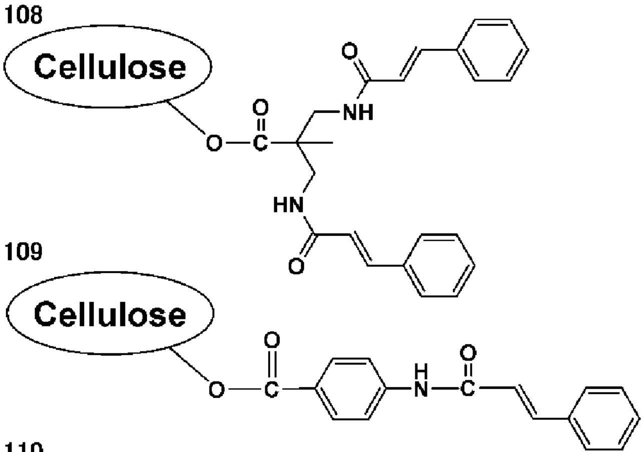

110

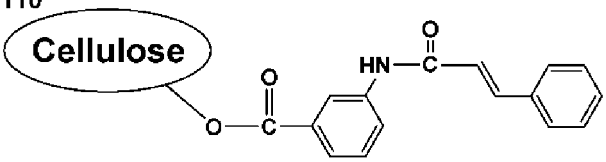

111

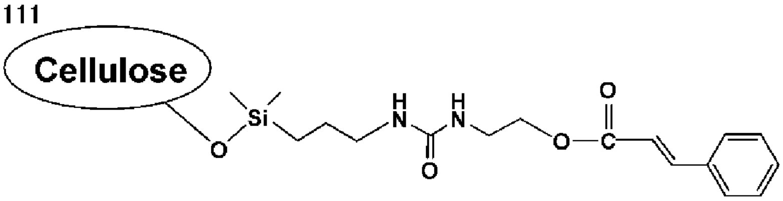

112

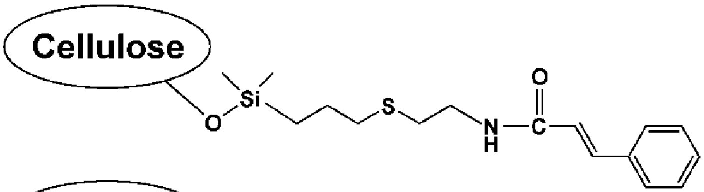

113

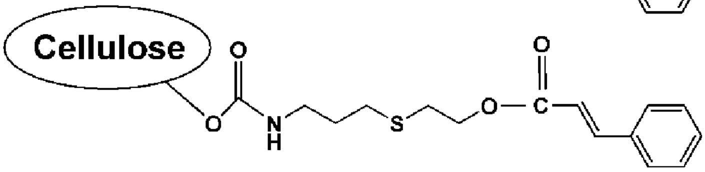

114

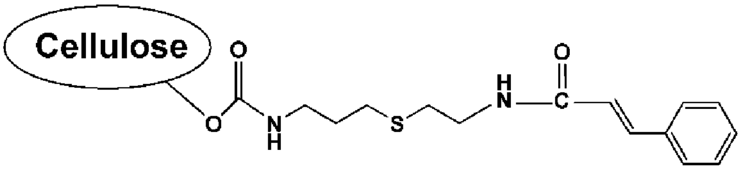

115

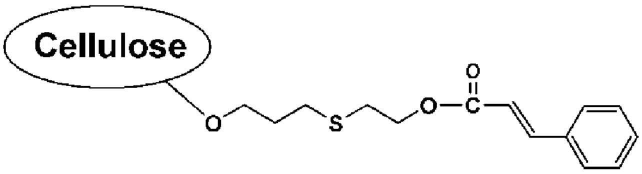

116

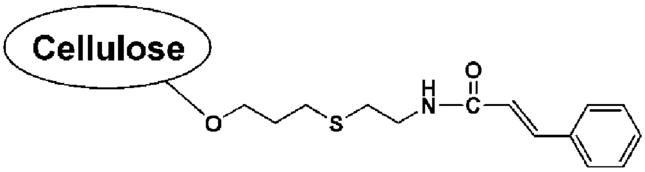

117

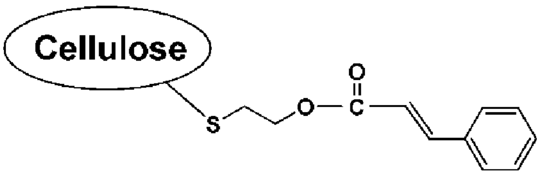

118

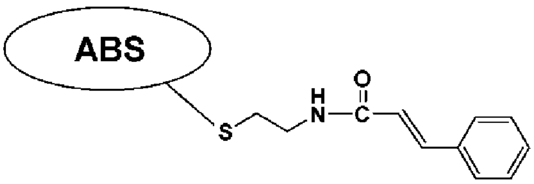

[Method for synthesizing a resin constituting a resin composition]

Next, representative synthesis examples of the resins constituting the above exemplified resin compositions will be described below.

«Synthesis of Resin»

[Synthesis example 1: Synthesis of Cellulose derivative-A]

Cellulose derivative-A, which is a cellulose acetate propionate, was synthesized with reference to Example B described in the Examples of JP-A 6-501040.

(Preparation of Solutions)

The following Solutions A to E were prepared.

- Solution A: Propionic acid: Concentrated sulfuric acid = 5:3 (mass ratio)
- Solution B: Acetic acid: Pure water = 3:1 (mass ratio)
- Solution C: Acetic acid: Pure water = 1:1 (mass ratio)
- Solution D: Acetic acid: Pure water: Magnesium carbonate = 12:11:1 (mass ratio)
- Solution E: An aqueous solution of 0.5 mol of potassium carbonate and 1.0 mol of citric acid in 14.6 kg of pure water

(Synthesis of Cellulose acetate propionate (CAP))

To a reaction vessel equipped with a mechanical stirrer, 100 parts by mass of cellulose purified from cotton, 317 parts by mass of acetic acid, and 67 parts by mass of propionic acid were added, and the mixture was stirred at 55 °C for 30 minutes. After lowering the temperature of the reaction vessel to 30 °C, 2.3 parts by mass of Solution A was added and stirred for 30 minutes. After cooling the temperature of the reaction vessel to -20 °C, 100 parts by mass of acetic anhydride and 250 parts by mass of propionic anhydride were added and stirred for 1 hour. After raising the temperature of the reaction vessel to 10 °C, 4.5 parts by mass of Solution A was added, and the temperature was increased to 60 °C, followed by stirring for 3 hours. Further, 533 parts by mass of Solution B was added and stirred for 17 hours. Further, 333 parts by mass of Solution C and 730 parts by mass of Solution D were added and stirred for 15 minutes. After filtering the insoluble matter, while stirring the solution, water was added until the formation of the precipitate was completed, and then the generating white precipitate was filtered. The resulting white solid was washed with pure water until the cleaning liquid became neutral. To this wet product, 1.8 parts by mass of Solution E was added and then dried under vacuum at 70 °C for 3 hours to obtain cellulose acetate propionate (CAP, Cellulose derivative-A).

When the degree of substitution of the obtained cellulose acetate propionate (cellulose derivative-A) was calculated based on ASTM-D817-96, the degree of substitution by the acetyl group was 1.9 and the degree of substitution by the propionyl group was 0.7. Further, when GPC was measured under the following conditions, the weight average molecular weight was 200,000.

(GPC Measurement Conditions)

| | |
|---|---|
| Solvent: | Methylene chloride |
| Columns: | Shodex K806, K805, K803 (used by connecting three columns manufactured by Showa Denko Co., Ltd.) |
| Column temperature: | 25°C |
| Sample concentration: | 0.1% by mass |
| Detector: | RI Model 504 (manufactured by GL Science, Inc.) |
| Pumps: | L6000 (manufactured by Hitachi, Ltd.) |
| Flow rate: | 1.0 mL/min |

[Synthesis example 2: Synthesis of Exemplified Compound 1 in which a double bond site having an ester bond is introduced into a cellulose derivative]

To a 500 mL eggplant flask, 200 mL of dichloromethane was charged, and 10.0 g of the above cellulose derivative-A was added in small portions as a polymer while stirring, and the mixture was stirred at room temperature for a while. After confirming complete dissolution of the cellulose derivative-A, 0.64 g of pyridine and 0.1 g of dimethylaminopyridine were added, and the solution was cooled to 0 °C in an ice bath. To a 10 mL dropping funnel, 5 mL of dichloromethane and 0.63 g of 3-butenoylchloride (manufactured by Alfa Chemical Co., Ltd.) were charged and added dropwise into the above-mentioned diacetylcellulose solution cooled over 10 minutes. After dropwise addition, the ice bath was removed and stirred at room temperature for 24 hours to obtain a reaction solution.

Then, 4 L of ethyl alcohol was placed in a 5 L beaker, a mechanical stirrer and a Teflon™ blade were installed, and the resulting reaction solution was added dropwise over a period of 1 hour while stirring. After stirring for 2 hours, the mixture was filtered under reduced pressure through a 30 cm diameter Nutsche filter paper. The resulting solid was

dried at 60 °C under reduced pressure to give 10.2 g of Exemplified Compound 1. As for Exemplified Compound 1, as a result of measurement by 1H-NMR and IR, it was confirmed that a double bond site having an ester bond was introduced into a cellulose derivative which is a polymer. Further, the degree of substitution calculated from 1H-NMR was 0.21.

[Synthesis example 3: Synthesis of Exemplified Compound 18 in which a double bond site having a urea structure is introduced into a cellulose derivative]

To a 500 mL eggplant flask, 200 mL of dichloromethane was charged, and 10.0 g of the above cellulose derivative-A was added in small portions while stirring, and the mixture was stirred at room temperature for a while. After confirming complete dissolution of the cellulose derivative-A, 0.50 g of allyl isocyanate (manufactured by Aldrich Co., Ltd.) and 2.1 mg of $MoO_2Cl_2$ $(DMF)_2$ complex were added, and the mixture was stirred at room temperature for 5 hours. The resulting solution was treated by the same method as in Synthesis example 2 above to obtain 10.5 g of Exemplified Compound 18. As for Exemplified Compound 18, it was confirmed that a double bond site having a urea structure was introduced into a cellulose derivative which is a polymer, as measured by 1H-NMR and IR. Further, the degree of substitution calculated from 1H-NMR was 0.23.

[Synthesis example 4: Synthesis of Exemplified Compound 13 in which a double bond site having silicon is introduced into a cellulose derivative]

In Synthesis example 2 (Synthesis of Exemplified Compound 1) described above, 10.6 g of Exemplified Compound 13 was obtained in the same manner except that 0.81 g of allylchlorodimethylsilane (manufactured by Aldrich Co., Ltd.) was used instead of 3-butenoylchloride. For Exemplified Compound 13, as a result of measurement by 1H-NMR and IR, it was confirmed that a double bond site having silicon was introduced into a cellulose derivative which is a polymer. Further, the degree of substitution calculated from 1H-NMR was 0.21.

[Synthesis example 5: Synthesis of Exemplified Compound 16 in which a double bond site having an ether bond is introduced into a cellulose derivative]

A 500 mL eggplant flask was used to construct a device capable of withstanding the water forbidden reaction, and the operation was carried out while flowing nitrogen. 200 mL of dehydration dichloromethane was charged into the apparatus, and 10.0 g of cellulose derivative-A was added in small portions while stirring, and the mixture was stirred at room temperature for a while. After confirming complete dissolution of the cellulose derivative-A, 0.22 g of sodium hydride was added in small portions. After the hydrogen generation had settled, 0.46 g of allyl chloride (manufactured by Tokyo Chemical Co., Ltd.) was charged and stirred at room temperature for 24h. The resulting solution was treated by the same method as in Synthetic Example 2 above to obtain 10.2 g of Exemplified Compound 16. As for Exemplified Compound 16, as a result of measurement by 1H-NMR and IR, it was confirmed that a double bond site having an ether bond was introduced into a cellulose derivative which is a polymer. Further, the degree of substitution calculated from 1H-NMR was 0.20.

[Synthesis example 6: Synthesis of Exemplified Compound 21 in which a double bond site having a thioether bond is introduced into an ABS derivative]

(Step 1: Synthesis of ABS derivative having a hydroxy group (ABS derivative-OH))

To a 500 mL quartz flask, 200 mL of dichloromethane was charged, and 10.0 g of Toyolac 700-314 (styrene-butadiene-acrylonitrile copolymer (ABS resin), manufactured by Toray Industries, Ltd.) was added in small portions while stirring, and the mixture was stirred at room temperature for a while. After confirming complete dissolution of the ABS resin, 1.85 g of 2-mercaptoethanol (manufactured by Aldrich Co., Ltd.) was added, and UV light (254 nm) was irradiated with stirring by the same method as in Green Chemistry, 2013, 15 (4), 1016. The resulting solution was treated by the same method as described in Synthesis example 2 to obtain 10.9 g of ABS derivative-OH.

(Step 2: Synthesis of Exemplified Compound 21)

Using 10.0 g of the ABS derivative-OH obtained in Step 1 above and 2.47 g of 3-butenoyl chloride (manufactured by Alfa Chemical Co., Ltd.), 10.4 g of Exemplified Compound 21 which is an ABS derivative was obtained in the same manner as in Synthesis example 2 described above. For Exemplified Compound 21, it was confirmed that a double bond site having a thioether bond was introduced into 52% of the butadiene double bond constituting ABS, which is a polymer, as analyzed by 1H-NMR and IR.

[Synthesis example 7: Synthesis of Exemplified Compound 24 in which a nitrile oxide group having an ester bond is introduced into a cellulose derivative]

(Step 1: Synthesis of 4-formyl-3,5-dimethoxybenzoyl chloride)

To a 200 mL flask, 10.0 g of 4-formyl-3,5-dimethoxybenzoic acid obtained by referring to the method described in Patent No. 5708936 was dissolved in 100 mL of tetrahydrofuran (hereinafter abbreviated as THF) and cooled to 0 °C in an ice bath. To this solution, 7.25 g of oxalyl chloride and 1 mL of N,N-dimethylformamide (hereinafter abbreviated as DMF) was charged, allowed to react for 2 hours, and then removed from an ice bath and reacted at room temperature for 3 hours. After distilling off THF under reduced pressure by an evaporator, 100 mL of THF was charged, and THF was distilled off under reduced pressure again. This procedure was repeated to give 10.9 g of 4-formyl-3,5-dimethoxybenzoyl chloride.

(Step 2: Synthesis of Exemplified Compound 24)

Using 4-formyl-3,5-dimethoxybenzoyl chloride obtained in Step 1 above, a cellulose derivative-OCO-CHO was obtained in the same manner as in Synthesis Example 2 described above. Hereinafter, dimethyl sulfoxide (hereinafter abbreviated as DMSO) was used as a solvent, and Exemplified Compound 24 which is a cellulose derivative having a nitrile oxide group in a side chain was obtained by referring to the method described in Chem. Lett., 39, 420. As a result of measurement by 1H-NMR and IR for Exemplified Compound 24, it was confirmed that a nitrile oxide group having an ester bond was introduced into a cellulose derivative which is a polymer in Exemplified Compound 24. Further, the degree of substitution calculated from 1H-NMR was 0.22.

[Synthesis Example 8: Synthesis of Exemplified Compound 38 in which a nitrile oxide group having a urea structure is introduced into a cellulose derivative]

(Step 1: Synthesis of a cellulose derivative having a terminal hydroxy group containing urea substituent (cellulose derivative-OCONH-OH))

To a 500 mL quartz flask, 200 mL of dichloromethane was charged, and 10.0 g of Exemplified Compound 18 synthesized in Synthesis Example 3 was added in small portions while stirring, and the mixture was stirred at room temperature for a while. After confirming complete dissolution of Exemplified Compound 18, 0.47 g of 2-mercaptoethanol (manufactured by Aldrich Co., Ltd.) was added, and the mixture was irradiated with UV-light (254nm) while stirring by the same method as described in Green Chemistry, 2013, 15 (4), 1016. The resulting solution was treated in the same manner as in Synthesis Example 2 to obtain 10.5 g of cellulose derivative-OCONH-OH.

(Step 2: Synthesis of Exemplified Compound 38)

Using 10.0 g of the cellulose derivative-OCONH-OH obtained in Step 1 above and 1.38 g of the 4-formyl-3,5-dimethoxybenzoyl chloride obtained in Step 1 of Synthesis Example 7, 10.6 g of Exemplified Compound 38 which is a cellulose derivative was obtained in the same manner as in Step 2 of Synthesis Example 7 above. As a result of measurement by 1H-NMR and IR for Exemplified Compound 38, it was confirmed that a nitrile oxide group having a urea structure was introduced into a cellulose derivative which is a polymer in Exemplified Compound 38. Further, the degree of substitution calculated from 1H-NMR was 0.21.

[Synthesis Example 9: Synthesis of Exemplified Compound 37 in which a nitrile oxide group having silicon is introduced into a cellulose derivative]

(Step 1: Synthesis of a cellulose derivative having a terminal hydroxy group containing silicon substituent (cellulose derivative-Si-OH))

Using 10.0 g of the Exemplified Compound 13 synthesized in Synthesis Example 4 and 0.47 g of 2-mercaptoethanol (manufactured by Aldrich Co., Ltd.), 10.5 g of cellulose derivative-Si-OH was obtained by the same method as in Step 1 of Synthesis Example 8.

(Step 2: Synthesis of Exemplified Compound 37)

Using 10.0 g of the cellulose derivative-Si-OH obtained in Step 1 above, 10.3 g of Exemplified Compound 37

which is a cellulose derivative was obtained in the same manner as in Step 2 of Synthesis Example 8.

As a result of analyzing the Exemplified Compound 37 by 1H-NMR and IR, it was confirmed that a nitrile oxide group having silicon was introduced into a cellulose derivative which is a polymer in Exemplified Compound 37. Further, the degree of substitution calculated from 1H-NMR was 0.23.

[Synthesis Example 10: Synthesis of Exemplified Compound 40 in which a nitrile oxide group having an ether bond is introduced into a cellulose derivative]

(Step 1: Synthesis of a cellulose derivative having a terminal hydroxy group containing ether substituent (cellulose derivative-O-OH)))

Using 10.0 g of the Exemplified Compound 16 synthesized in Synthesis Example 5 and 0.47 g of 2-mercaptoethanol (manufactured by Aldrich Co., Ltd.), 10.7 g of cellulose derivative-O-OH was obtained by the same method as in Step 1 of Synthesis Example 8.

(Step 2: Synthesis of Exemplified Compound 40)

Using 10.0 g of the cellulose derivative-O-OH obtained in Step 1 above, 10.2 g of Exemplified Compound 40 was obtained in the same manner as in Step 2 of Synthesis Example 8. As a result of analyzing the Exemplified Compound 40 by 1H-NMR and IR, it was confirmed that a nitrile oxide group having an ether bond was introduced into a cellulose derivative which is a polymer in the Exemplified Compound 40. Further, the degree of substitution calculated from 1H-NMR was 0.23.

[Synthesis Example 11: Synthesis of Exemplified Compound 43 in which a nitrile oxide group having a thioether bond is introduced into an ABS derivative]

(Step 1: Synthesis of ABS derivative having an amino group (ABS derivative-$NH_2$))

Using 1.83 g of 2-aminoethanethiol (manufactured by Aldrich Co., Ltd.), 10.6 g of ABS derivative-$NH_2$ was obtained by the same method as in Step 1 of Synthesis Example 6.

(Step 2: Synthesis of Exemplified Compound 43)

Using 10.0 g of the ABS derivative-$NH_2$ obtained in Step 1 above, 10.6 g of Exemplified Compound 43 which is an ABS derivative was obtained in the same manner as in Step 2 of Synthesis Example 8. As a result of analyzing the Exemplified Compound 43 by 1H-NMR and IR, it was confirmed that a double bond site having a thioether bond was introduced into 49% of the butadiene double bond constituting ABS as a polymer in the Exemplified Compound 43.

[Synthesis Example 12: Synthesis of Exemplified Compound 44 in which a thiol group having an ester bond is introduced into a cellulose derivative]

Using 10.0 g of the above synthesized cellulose derivative-A and 0.73 g of 3-mercaptobutanoic acid (manufactured by Aldrich), 10.4 g of Exemplified Compound 44 as a cellulose derivative was obtained in the same manner as described in JP-A2011-84479. As a result of analyzing the Exemplified Compound 44 by 1H-NMR and IR, it was confirmed that a thiol having an ester bond was introduced into the cellulose derivative which is a polymer in the Example Compound 44. Further, the degree of substitution calculated from 1H-NMR was 0.20.

[Synthesis Example 13: Synthesis of Exemplified Compound 58 in which a thiol having a urea structure is introduced into a cellulose derivative]

Using 10.0 g of the cellulose derivative-Si-OH obtained in Step 1 of Synthesis Example 9, 10.1 g of Exemplified Compound 55, which is a cellulose derivative, was obtained in the same manner as in Synthesis Example 12. As a result of analyzing the Exemplified Compound 58 by 1H-NMR and IR, it was confirmed that a thiol having a urea structure was introduced into a cellulose derivative which is a polymer in Exemplified Compound 58. Further, the degree of substitution was 0.22.

[Synthesis Example 14: Synthesis of Exemplified Compound 55 in which a thiol group having silicon is introduced into a cellulose derivative]

Using 10.0 g of the cellulose derivative-Si-OH obtained in Step 1 of Synthesis Example 9, 10.1 g of Exemplified Compound 55, which is a cellulose derivative, was obtained in the same manner as in Synthesis Example 12. As a result of analyzing the Exemplified Compound 55 by 1H-NMR and IR, it was confirmed that a thiol having silicon was introduced into a cellulose derivative which is a polymer in Exemplified Compound 55. Further, the degree of substitution calculated from 1H-NMR was 0.21.

[Synthesis Example 15: Synthesis of Exemplified Compound 60 in which a thiol group having an ether bond is introduced into a cellulose derivative]

(Step 1: Synthesis of a cellulose derivative (cellulose derivative-O-$NH_2$) having a terminal amino group containing an ether substituent)

In Step 1 of Synthesis Example 10, 10.3 g of cellulose derivative-O-$NH_2$ was obtained in the same manner except that 2-mercaptoethanol (manufactured by Aldrich Co.) was changed to 2-aminoethanethiol (manufactured by Aldrich Co.).

(Step 2: Synthesis of a cellulose derivative (cellulose derivative-O-SAc) in which a thiol group is protected with an acetyl group)

Using 10.0 g of the cellulose derivative-O-$NH_2$ obtained in Step 1 above and 1.09 g of 3-(acetylthio)butanoyl chloride (manufactured by Chemieliva Pharmaceutical Co., Ltd.), a cellulose derivative-O-SAc was obtained in the same manner as in Synthesis Example 2 described above.

(Step 3: Synthesis of Exemplified Compound 60)

Using the cellulose derivative-O-SAc obtained in Step 2 above, the acetyl group was deprotected with reference to Organic Letters,2001, 3 (2), 283, to obtain 10.5 g of Exemplified Compound 60 which is a cellulose derivative. As a result of analyzing the Exemplified Compound 60 by 1H-NMR and IR, it was confirmed that a thiol having an ether bond was introduced into a cellulose derivative which is a polymer in the Exemplified Compound 60. Further, the degree of substitution calculated from 1H-NMR was 0.22.

[Synthesis Example 16: Synthesis of Exemplified Compound 61 in which a thiol group having a thioether bond is introduced into an ABS derivative]

Using 10.0g of the ABS derivative-OH obtained in Step 1 of Synthesis Example 6 and 4.28 g of 3-(acetylthio)butanoyl chloride (manufactured by Chemieliva Pharmaceutical Co., Ltd.), 10.8 g of Exemplified Compound 61 which is an ABS derivative was obtained in the same manner as in the process of Step 2 and Step 3 of Synthesis Example 15. As a result of analyzing the Exemplified Compound 61 by 1H-NMR and IR, it was confirmed that a thiol having a thioether bond was introduced into 50% of the butadiene double bond constituting the ABS as a polymer in Exemplified Compound 61.

[Synthesis Example 17: Synthesis of Exemplified Compound 86 in which a maleimide site having an ester bond is introduced into a cellulose derivative]

Using p-N-succinimide benzoate chloride synthesized with reference to the description of Egyptian Journal of Chemistry, 1993, 36(2), 149, in the same manner as in Synthesis Example 2 described above, 10.9 g of Exemplified Compound 86 as a cellulose derivative was obtained. As a result of analyzing the Exemplified Compound 86 by 1H-NMR and IR, it was confirmed that a maleimide site having an ester bond was introduced into a cellulose derivative which is a polymer in Exemplified Compound 86. Further, the degree of substitution calculated from 1H-NMR was 0.23.

[Synthesis Example 18: Synthesis of Exemplified Compound 91 in which a maleimide site having a urea structure is introduced into a cellulose derivative]

Using 10.0 g of the cellulose derivative-OCONH-OH obtained in Step 1 of Synthesis Example 8 and 1.22 g of 2,5-dihydro-2,5-dioxo-1H-pyrrole-1-butanoyl chloride (manufactured by Chemieliva Pharmaceutical Co., Ltd.), 10.2 g of

Exemplified Compound 91 as a cellulose derivative was obtained in the same manner as in Synthesis Example 2 described above. As a result of analyzing the Exemplified Compound 91 by 1H-NMR and IR, it was confirmed that a maleimide site having a urea structure was introduced into a cellulose derivative which is a polymer in the Exemplified Compound 91. Further, the degree of substitution calculated from 1H-NMR was 0.21.

[Synthesis Example 19: Synthesis of Exemplified Compound 89 in which a maleimide site having silicon is introduced into a cellulose derivative]

(Step 1: Synthesis of a cellulose derivative having a terminal isocyanate group containing silicon substituent (cellulose derivative-Si-NCO))

Using 10.0 g of the cellulose derivative-A and 1.07 g of chloro(3-isocyanatopropyl)dimethylsilane (manufactured by Alfa Chemistry Co., Ltd.), 10.8 g of cellulose derivative-Si-NCO was obtained in the same manner as in Synthesis Example 2 described above.

(Step 2: Synthesis of a cellulose derivative having a terminal hydroxy group containing silicon substituent (cellulose derivative-Si-OH-2))

Using 10.0 g of the cellulose derivative-Si-NCO obtained in Step 1 above and 0.47 g of 2-aminoethanethiol (manufactured by Aldrich Co., Ltd.), 10.3 g of cellulose derivative-Si-OH-2 was obtained in the same manner as in Journal of Polymer Science, Part A: Polymer Chemistry, 2014, 52 (5), 728.

(Step 3: Synthesis of Exemplified Compound 89)

Using the cellulose derivative-Si-OH-2 obtained in Step 2 above, and 1.13 g of 2,5-dihydro-2,5-dioxo-pyrrole-1-propanoylchloride (manufactured by Chemieliva Pharmaceutical Co., Ltd.), 10.3 g of Exemplified Compound 89 as a cellulose derivative was obtained in the same manner as in Synthesis Example 2 above. As a result of analyzing the Exemplified Compound 89 by 1H-NMR and IR, it was confirmed that a maleimide site having silicon was introduced into the cellulose derivative as a polymer in the Exemplified Compound 89. Further, the degree of substitution calculated from 1H-NMR was 0.19.

[Synthesis Example 20: Synthesis of Exemplified Compound 94 in which a maleimide site having an ether bond is introduced into a cellulose derivative]

Using 10.0 g of the cellulose derivative-O-$NH_2$ obtained in Step 1 of Synthesis Example 15 and 1.22 g of p-N-succinimide benzoate chloride obtained in Synthesis Example 17, 10.6 g of Exemplified Compound 94 as a cellulose derivative was obtained in the same manner as in Synthesis Example 2 described above. As a result of analyzing the Exemplified Compound 94 by 1H-NMR and IR, it was confirmed that a maleimide site having an ether bond was introduced into a cellulose derivative which is a polymer in Exemplified Compound 94. Further, the degree of substitution calculated from 1H-NMR was 0.22.

[Synthesis Example 21: Synthesis of Exemplified Compound 95 in which a maleimide site having a thioether bond is introduced into an ABS derivative]

Using 10.0 g of the ABS derivative-OH obtained in Step 1 of Synthesis Example 6 and 4.44 g of 2,5-dihydro-2,5-dioxo-pyrrole-1-propanoylchloride (manufactured by Chemieliva Pharmaceutical Co., Ltd.), Exemplified Compound 95 which is an ABS derivative was obtained in the same manner as in Synthesis Example 2 described above. As a result of analyzing the Exemplified Compound 95 by 1H-NMR and IR, it was confirmed that a double bond site having a thioether bond was introduced into 52% of the butadiene double bond constituting ABS as a polymer in Exemplified Compound 95.

[Synthesis Example 22: Synthesis of Exemplified Compound 66 in which a furan ring having an ester bond is introduced into a cellulose derivative]

Using 10.0 g of the above Exemplified Compound 1 and 1.13 g of furfuryl-3-mercaptopropionate (manufactured by Alfa Chemistry Co., Ltd.), 10.4 g of Exemplified Compound 66 which is a cellulose derivative was obtained by an ene-thiol reaction according to the same procedure as in Synthesis Example 6. As a result of analyzing the Exemplified Compound 66 by 1H-NMR and IR, it was confirmed that a furan ring having an ester bond was introduced into a cellulose

derivative which is a polymer in the Exemplified Compound 66. Further, the degree of substitution calculated from 1H-NMR was 0.20.

[Synthesis Example 23: Synthesis of Exemplified Compound 71 in which a furan ring having a urea structure is introduced into a cellulose derivative]

(Step 1: Synthesis of furan site group containing isocyanate)

A furan site group containing isocyanate was synthesized using a 3-isocyanatepropanoyl chloride (manufactured by Alfa Chemistry Co., Ltd.) and furfuryl alcohol (manufactured by Tokyo Chemical Co., Ltd.) in the same manner as in Synthesis Example 2 described above.

(Step 2: Synthesis of Exemplified Compound 71)

Using 10.0 g of the cellulose derivative-A and 1.18 g of the furan site group containing isocyanate obtained in Step 1 above, Exemplified Compound 71 which is a cellulose derivative was obtained in the same manner as in Journal of Polymer Science, Part A: Polymer Chemistry, 2014, 52 (5), 728. As a result of analyzing the Exemplified Compound 71 by 1H-NMR and IR, it was confirmed that a furan ring having a urea structure was introduced into a cellulose derivative which is a polymer in Exemplified Compound 71. Further, the degree of substitution calculated from 1H-NMR was 0.21.

[Synthesis Example 24: Synthesis of Exemplified Compound 75 in which a furan ring having silicon is introduced into a cellulose derivative]

Using 10.0 g of the Exemplified Compound 13 obtained in Synthesis Example 4 and 1.18 g of furfuryl-3-mercaptopropionate (manufactured by Alfa Chemistry Co., Ltd.), the same ene-thiol reaction as in Step 1 of Synthesis Example 6 described above gave Exemplified Compound 75 which is a cellulose derivative. As a result of analyzing the Exemplified Compound 75 by 1H-NMR and IR, it was confirmed that a furan ring having silicon was introduced into a cellulose derivative which is a polymer in Exemplified Compound 75. Further, the degree of substitution calculated from 1H-NMR was 0.20.

[Synthesis Example 25: Synthesis of Exemplified Compound 76 in which a furan ring having an ether bond is introduced into a cellulose derivative]

Using 10 g of the Exemplified Compound 16 obtained in Synthesis Example 5 and 1.18 g of furfuryl-3-mercaptopropionate (manufactured by Alfa Chemistry Co., Ltd.), and using the same ene-thiol reaction as in Step 1 of Synthesis Example 6 described above, Exemplified Compound 76 which is a cellulose derivative was produced. As a result of analyzing the Exemplified Compound 76 by 1H-NMR and IR, it was confirmed that a furan ring having an ether bond was introduced into a cellulose derivative which is a polymer in Exemplified Compound 76. Further, the degree of substitution calculated from 1H-NMR was 0.22.

[Synthesis Example 26: Synthesis of Exemplified Compound 77 in which a furan ring having a thioether bond is introduced into an ABS derivative]

Using 10.0 g of Toyolac 700-314 (styrene-butadiene-acrylonitrile copolymer (ABS resin), manufactured by Toray Industries, Ltd.) and 4.62 g of furfuryl-3-mercaptopropionate (manufactured by Alfa Chemistry Co., Ltd.), 10.6 g of Exemplified Compound 77 which is an ABS derivative was obtained by the same ene-thiol reaction as in Step 1 of Synthesis Example 6 described above. As a result of analyzing the Exemplified Compound 77 by 1H-NMR and IR, it was confirmed that a furan ring having a thioether bond was introduced into 52% of the butadiene double bond constituting ABS as a polymer in Exemplified Compound 77.

[Synthesis Example 27: Synthesis of Exemplified Compound 97 in which a cinnamic acid residue having an ester bond is introduced into a cellulose derivative]

Using cinnamic acid chloride obtained from Tokyo Chemical Co., Ltd., in the same manner as in Synthesis Method 2 described above, 10.6 g of Exemplified Compound 97 which is a cellulose derivative was obtained. As a result of analyzing the Exemplified Compound 97 by 1H-NMR and IR, it was confirmed that a cinnamic acid residue having an ester bond was introduced into a cellulose derivative which is a polymer in the Exemplified Compound 97. Further, the degree of substitution calculated from 1H-NMR was 0.20.

[Synthesis Example 28: Synthesis of Exemplified Compound 114 in which a cinnamic acid residue having a urea structure is introduced into a cellulose derivative]

(Step 1: Synthesis of a cellulose derivative having a terminal amino group containing urea substituent (cellulose derivative-OCONH-$NH_2$))

A cellulose derivative-OCONH-$NH_2$ was obtained in the same manner except that the 2-mercaptoethanol (manufactured by Aldrich Co., Ltd.) of Step 1 of Synthesis Example 8 was replaced with a 2-aminoethanethiol (manufactured by Aldrich Co., Ltd.).

(Step 2: Synthesis of Exemplified Compound 114)

Using 10 g of the cellulose derivative-OCONH-$NH_2$ obtained in the above step and 1.01 g of cinnamic acid chloride, and in the same manner as in Synthesis Example 2, 10.1 g of Exemplified Compound 114 which is a cellulose derivative was obtained. As a result of analyzing the Exemplified Compound 114 by 1H-NMR and IR, it was confirmed that a cinnamic acid residue having a urea structure was introduced into the cellulose derivative which is a polymer in the Exemplified Compound 114. Further, the degree of substitution calculated from 1H-NMR was 0.22.

[Synthesis Example 29: Synthesis of Exemplified Compound 111 in which a cinnamic acid residue having silicon is introduced into a cellulose derivative]

Using 10 g of the cellulose derivative- Si-OH-2 obtained in Step 2 of Synthesis Example 19 and 1.01 g of cinnamic acid chloride, 10.5 g of Exemplified Compound 111 which is a cellulose derivative was obtained in the same manner as in Synthesis Example 2. As a result of analyzing the Exemplified Compound 111 by 1H-NMR and IR, it was confirmed that a cinnamic acid residue having silicon was introduced into the cellulose derivative which is a polymer in the Exemplified Compound 111. Further, the degree of substitution calculated from 1H-NMR was 0.21.

[Synthesis Example 30: Synthesis of Exemplified Compound 115 in which a cinnamic acid residue having an ether bond is introduced into a cellulose derivative]

Using 10 g of the cellulose derivative-O-OH obtained in Step 1 of Synthesis Example 10 and 1.01 g of cinnamic acid chloride, 10.5 g of Exemplified Compound 115 which is a cellulose derivative was obtained in the same manner as in Synthesis Example 2. As a result of analyzing the Exemplified Compound 115 by 1H-NMR and IR, it was confirmed that a cinnamic acid residue having an ether bond was introduced into the cellulose derivative which is a polymer in the Exemplified Compound 115. Further, the degree of substitution calculated from 1H-NMR was 0.21.

[Synthesis Example 31: Synthesis of Exemplified Compound 117 in which a cinnamic acid residue having a thioether bond is introduced into an ABS derivative]

Using 10.0 g of the ABS derivative-OH obtained in Step 1 of Synthesis Example 6 and 3.94 g of cinnamic acid chloride, 10.3 g of Exemplified Compound 117 which is an ABS derivative was obtained in the same manner as in Synthesis Example 2. As a result of analyzing the Exemplified Compound 117 by 1H-NMR and IR, it was confirmed that a cinnamic acid residue having a thioether bond was introduced into 50% of the butadiene double bond constituting ABS as a polymer in the Exemplified Compound 117.

Compounds other than those exemplified above may be synthesized with reference to the method shown above.

[Other additives to Resin composition]

In the present invention, when forming a three-dimensional laminate, in addition to the resin according to the present invention, various additives may be applied to the resin composition of the present invention within a range not impairing the object effect of the present invention. Below is an example of an applicable additive.

(Plasticizer)

In the present invention, it is preferable to add a compound known as a plasticizer from the viewpoint of modifying a resin composition such as improvement in mechanical properties, imparting flexibility, imparting water absorption resistance, and reducing moisture transmittance.

Examples of the plasticizer applicable to the present invention include a phosphoric ester-based plasticizer,

an ethylene glycol ester-based plasticizer, a glycerin ester-based plasticizer, a diglycerin ester-based plasticizer (fatty acid ester), a polyhydric alcohol ester-based plasticizer, a dicarboxylic ester-based plasticizer, a polyvalent carboxylic ester-based plasticizer, and a polymer plasticizer.

Among these, it is preferable to use either of a polyhydric alcohol ester plasticizer (an ester-based plasticizer composed of a polyhydric alcohol and a monovalent carboxylic acid), a polyvalent carboxylic ester plasticizer (an ester-based plasticizer composed of a polyvalent carboxylic acid and a monohydric alcohol), or both.

For details of plasticizers applicable to three-dimensional laminates using the resin composition of the present invention, examples thereof include the compounds described in paragraphs (0089) to (103) of Japanese Patent No. 461383. The addition amount is not particularly limited as long as the resin composition of the present invention is thermally melted and kneaded, and injection molded, but is preferably 0.001 to 50 parts by mass, more preferably 0.01 to 30 parts by mass, and still more preferably 0.1 to 15 parts by mass, in 100 parts by mass of the resin composition of the present invention.

(Antioxidants)

At the time of forming the three-dimensional laminate of the present invention, an antioxidant may also be applied in order to prevent decomposition of the resin due to heat.

Examples of antioxidants applicable to the present invention include phenolic antioxidants, phosphorus antioxidants, sulfur antioxidants, heat-resistant process stabilizers, and oxygen scavengers. Among these, phenolic antioxidants are preferable, particularly hindered phenolic antioxidants having branched alkyl at an ortho position with respect to a hydroxy group of a phenolic compound are preferable.

For details of antioxidants applicable to three dimensional laminates using the resin composition of the present invention, examples thereof include the compounds described in paragraphs (104) to (109) of Japanese Patent No. 461383. The amount of the antioxidant to be added is appropriately selected within a range not impairing the object of the present invention, but is preferably 0.001 to 5 parts by mass, more preferably 0.01 to 3.0 parts by mass, and still more preferably 0.1 to 1.0 parts by mass, in 100 parts by mass of the resin composition of the present invention.

(Light stabilizer)

At the time of forming the three-dimensional laminate of the present invention, a light stabilizer may also be applied in order to prevent decomposition of the resin due to heat or light.

Light stabilizers applicable to the present invention include hindered amine light stabilizer (HALS) compounds having bulky organic groups (e.g., bulky branched alkyl groups) in the vicinity of the N atom, which are known compounds, including, for example, 2,2,6,6-tetraalkylpiperidine compounds, or acid addition salts thereof or complexes thereof with metallic compounds, as described in paragraphs 5 to 11 of U.S. Pat. No. 4619956 and paragraphs 3 to 5 of U.S. Pat. No. 4839405. The amount of the light stabilizer to be added is appropriately selected within a range not impairing the object of the present invention, but is preferably from 0.001 to 5.0 parts by mass, more preferably from 0.01 to 3.0 parts by mass, and still more preferably from 0.1 to 1.0 parts by mass, in 100 parts by mass of the resin composition of the present invention.

(Acid scavenger, Ultraviolet absorber)

Examples of the additive applicable to the three dimensional laminate using the resin composition of the present invention include an acid scavenger described in paragraphs (115) to (117) of Japanese Patent No. 461383, an ultraviolet absorber described in paragraphs (118) to (122).

(Other additives)

Further, examples of the various resin additives which may be used in combination in the three-dimensional laminate using the resin composition of the present invention include fine particles, a mold releasing agent, a dye pigment, a flame retardant, an antistatic agent, an antifogging agent, a lubricant/anti-blocking agent, a fluidity improver, a dispersant, and a fungicide. In addition, various fillers may be blended. There is no particular limitation on the filler to be blended as long as it is generally used in this type of material for hot melt extrusion method, and a powdery, fibrous, granular and plate-like inorganic filler may be preferably used, and a resin-based filler or a natural-based filler may also be preferably used. Two or more of these may be used in combination.

<<Three-dimensional laminate>>

[Formation of molded body from resin composition]

The resin composition for the hot melt extrusion method of the present invention may be produced, for example, by mixing each of the above components using a mixer and then melt-kneading the mixture. As a mixer, a Banbury mixer, a roll mixer, or a Brabender mixer is used, and for melt-kneading, a single-screw kneading extruder, a twin-screw kneading extruder, or a kneader is used. Further, a method may be employed in which each component is not mixed in advance, or only a part of the component is mixed in advance and supplied to an extruder by a feeder to be melt-kneaded. In particular, a method in which a compound component having a polar group according to the present invention is supplied to an extruder without mixing other components and melt-kneaded by a feeder is preferred in terms of extrusion workability.

A method of producing a molded body from a material for a hot melt extrusion method of the present invention is not particularly limited, and a molding method generally adopted for a thermoplastic resin may also be employed. Examples thereof include general injection molding method, ultra-high speed injection molding method, injection compression molding method, two-color molding method, hollow molding method such as gas assist, molding method using heat insulating mold, molding method using rapid heating mold, foam molding (including supercritical fluid), insert molding, IMC (in-mold coating molding) molding method, extrusion molding method, sheet molding method, thermal molding method, rotary molding method, laminated molding method, and press molding method. A molding method using the hot runner system may also be adopted.

In the present invention, as a method of forming a molded body by a hot melt extrusion method, for example, a method of injecting a hot molten resin composition into a mold of a predetermined size to form a plate-like molded body of a specific shape using an injection molding method, or a method of hot melt extruding a hot molten resin composition into a filament shape, and then cooling and solidifying in the air or water to form filament yarns as a molded body. The filament yarn is preferably in the form of a continuous line, and may be wound around a bobbin and stored or skewed into a compact form.

As a liquid used for cooling and solidification, water, ethylene glycol, polyethylene glycol, glycerin, and silicone may be used, but water having good workability and hardly causing environmental pollution is most preferred because it is not necessary to bring the liquid bath to a high temperature. Therefore, water is most preferred.

The filament yarn which is a cooled and solidified filament material may be wound as it is after drying. Alternatively, if necessary, stretching may be performed in an atmosphere at a temperature of 20 to 80 °C. In the case of stretching, the stretching may be performed in one stage or in multiple stages of two or more stages.

[Formation of Three-dimensional laminate]

A three-dimensional laminate of the present invention is a three-dimensional laminate having 2 or more layers containing a molded body forming material, wherein at least one layer of layers containing the molded body forming material contain a resin composition of the present invention. More preferably, it is preferable that all of the layers containing the molded body forming material have a configuration including the resin composition of the present invention.

The three-dimensional laminate may have, for example, a configuration in which a plurality of plate-shaped molded bodies are laminated as described above, or a configuration in which filament-shaped molded bodies are laminated.

For example, when laminating a plate-like molded body, from the viewpoint of enhancing adhesion between plates, after forming the first molded body plate of the first layer, after imparting a solvent on the first plate shape, it may be a method of laminating by imparting a second molded body plate of the second layer.

The method for manufacturing a three-dimensional laminate of the present invention, which is manufactured by a hot melt extrusion method, is characterized in that it includes at least a step of forming a first molded body, a step of laminating a second molded body on the first molded body to form a laminate body, and a step of performing a curing treatment on the laminate body.

As the curing treatment of the laminate referred to here, a treatment in which the functional groups react with each other by heat around 100 °C or light in an ultraviolet region, to form a covalent bond is referred to. A method for increasing the adhesive strength between each molded body after forming a laminate, wherein in the resin composition to be applied, a reaction of a nitrile oxide group which reacts with a double bond site without catalyst, an ene-thiol reaction which forms a sulfide bond by a double bond site and a thiol group, and a Diels-Alder reaction using a furan site and a maleimide site which are closed at around 100 °C and open at around 150 °C, these reactions form a covalent bond by imparting heat around 100 °C, thereby improving hardness. In addition, in a system using a resin composition having a cinnamic acid residue, dimerization occurs by irradiating active energy, e.g., ultraviolet rays, and the hardness is improved by forming a covalent bond between layers.

In the method for producing a three-dimensional laminate using a resin composition for a hot melt extrusion method of the present invention, particularly when a filament material is used as a resin composition, it is effective to apply a 3D printer.

As a method for forming a three-dimensional laminate by a 3D printer, a hot melt laminate method (FDM method), an ink jet method, an optical molding method, a gypsum powder lamination method, and a laser sintering method (SLS method) are listed. Among these it is preferable to use in the hot melt laminate method. Hereinafter, the case of the hot melt laminate method will be exemplified and explained. The present invention is characterized in that the laminate body is produced by a hot melt lamination method (FDM method) using a hot melt extrusion method. Hereinafter, a hot melt lamination method will be described.

A 3D printer generally has a chamber in which a heatable substrate, an extrusion head installed in a gantry structure, a heat melter, a guide for a hot melt extrusion material (kneaded product) used for forming molded bodies of the hot melt extrusion method of the present invention, and a raw material supplying unit such as a hot melt extrusion type material cartridge installing unit are installed. Some 3D printers integrate an extruder head and a heat melter.

The extrusion head is mounted on the gantry structure so that it may be moved arbitrarily over the X-Y plane of the substrate. The substrate is a platform for constructing a target three-dimensional laminate, or a supporting material, and it is preferable that the substrate has a specification capable of obtaining adhesiveness to a laminate by heating and warming, or improving dimensional stability of the obtained molded body as a desired three-dimensional molded body. The extrusion head and the substrate are configured that usually at least one is movable in the Z-axis direction perpendicular to the X-Y plane.

A filament for 3D printer molding is fed from the raw material feed section, fed into the extrusion head by a pair of rollers or gears facing each other, heated and melted by the extrusion head, and extruded from the tip nozzle. For example, the signal transmitted based on the CAD (Computer Aided Design) model causes the extrusion head to feed and deposit the heat-melt extrusion material onto the substrate while moving its position. After this step is completed, the laminated deposit may be taken out from the substrate, and if necessary, the support material may be peeled off, or an extra portion may be cut to obtain a desired three-dimensional laminate.

A means for continuously supplying a filament material which is a material for hot melt extrusion method into an extrusion head may be exemplified by a method of feeding out and supplying a resin composition of the present invention which is a material for hot melt extrusion method, a method of supplying a resin composition of the present invention of a powder or a liquid from a tank via a quantitative feeder, a method of extruding and supplying a resin composition of the present invention of a pellet or a granule plasticized by an extruder, but from the viewpoint of simplicity of the process and supply stability, a method of feeding and supplying a resin composition of the present invention which is a material for a hot melt extrusion method is most preferred.

When the filament material, which is the resin composition of the present invention, is supplied to a 3D printer, it is common to engage the filament material with a driving roller such as a nip roller or a gear roller, and supply the filament material to an extrusion head while drawing the filament material. Here, in order to stabilize the supply of the raw material by further strengthening the grip by the engagement between the filament material and the drive roller, it is preferable to transfer the minute uneven shape onto the surface of the filament material, or to blend an inorganic additive, spreading agent, pressure-sensitive adhesive, rubber, for increasing the frictional resistance with the engagement portion.

In the resin composition applied by the hot melt extrusion method of the present invention, the temperature for obtaining appropriate fluidity at the time of extrusion is usually about 190 to 240 °C, which may be set by a general-purpose 3D printer, and in the manufacturing method used in the present invention, the temperature of the heated extrusion head is usually 230 °C or less, preferably 200 to 220 °C, and the substrate temperature is usually 80 °C or less, preferably 50 to 70 °C, to stably manufacture the molded body.

The temperature (discharge temperature) of the resin composition ejected from the extrusion head is preferably 180 °C or higher, more preferably 190 °C or higher, while being preferably 250 °C or lower, more preferably 240 °C or lower, and still more preferably 230 °C or lower. When the temperature of the resin composition used for forming the molded body of the hot melt extrusion method is equal to or higher than the above lower limit value, it is preferable in order to extrude a resin having high heat resistance, and also from the viewpoint of preventing a fragment in which the resin composition is thinly stretched, which is generally referred to as yarn drawing, from remaining in the molded article, and deteriorating the appearance. On the other hand, when the temperature of the resin composition is equal to or lower than the above upper limit value, it is preferable because it is easy to prevent the occurrence of problems such as thermal decomposition, burning, smoking, odor, and stickiness of the thermoplastic resin, it is possible to discharge at high speed, and the molding efficiency tends to be improved.

The resin composition for use in forming a molded body of a hot melt extrusion method ejected from an extrusion head is preferably ejected in a filament form having a diameter of 0.01 to 1 mm, more preferably a diameter of 0.02 to 0.5 mm, to form a monofilament yarn. When formed of such a monofilament yarn, it becomes a molded body having high versatility.

In manufacturing a three-dimensional laminate by a 3D printer using a resin composition for 3D printer molding, when the three-dimensional laminate is molded while stacking the resin composition in the form of monofilament yarn ejected from the extrusion head, uneven discharge may cause unevenness in the surfaces of the molded bodies due to insufficient adhesiveness between the monofilament yarn formed from the resin composition discharged earlier and the monofilament yarn of the second resin composition discharged thereon. If an uneven portion exists on the surface of the molded body, not only the appearance is deteriorated, but also a problem that the molded body is liable to be damaged may occur.

The resin composition for molding a 3D printer of the present invention may stably produce a resin composition which is excellent in appearance and surface properties, and which is capable of suppressing ejection unevenness at the time of molding of the resin composition of the present invention.

When a three-dimensional laminate is formed while laminating a resin composition of a monofilament yarn ejected from an extrusion head by a 3D printer, there is a step of stopping discharge of the resin composition and then moving nozzles to a lamination point in the next step. At this time, a thin filament yarn may be generated without breaking the resin composition, and may remain on the surface of the shaped article so as to draw the yarn. When the above-mentioned thread drawing occurs, a problem such as deterioration of the appearance of the three-dimensional laminate may occur.

When a three-dimensional laminate is formed by stacking materials for hot melt extrusion method of monofilament yarns method from an extrusion head by a 3D printer, the resin composition may adhere to the nozzles of the extrusion head, and the adhered resin composition may be colored by heat to form black foreign matter (black spots or black streaks). When such a foreign substance is mixed into the shaped object, not only the appearance is deteriorated, but also the molded body is easily damaged in some cases.

Since the resin composition for a 3D printer of the present invention is excellent in heat resistance and hardly causes colorant due to heat even if it adheres to a nozzle portion, a molded body having an excellent appearance may be stably produced.

«Application field of Resin Composition and Three-dimensional laminate»

The resin composition of the present invention is characterized in that it is excellent in transparency, high rigidity, and heat resistance. The resin composition of the present invention having such features may be used in a wide range of fields as a three-dimensional laminate for a 3D printer, electrical and electronic equipment and its components, OA equipment, information terminal equipment, mechanical components, home appliances, vehicle components, medical instruments, building members, various containers, leisure goods and miscellaneous goods, various applications such as lighting equipment useful, in particular it may be expected to be applied to electrical and electronic equipment, vehicle members and medical instruments.

Examples of housings, covers, keyboards, buttons, and switch members for electric and electronic equipment, office automation equipment, and information terminal equipment include personal computers, game consoles, and display devices such as televisions; printers, copiers, scanners, faxes, electronic notebooks, PDAs, electronic desktop computers, electronic dictionaries, cameras, video cameras, mobile phones, drives and readers for recording media, housings for mice, ten-keys, CD players, MD players, portable radios, and portable audio players; covers, keyboards, buttons, and switch members.

Examples of vehicle members include head lamps and helmet shields. As the interior member, an inner door handle, a center panel, an instrumental panel, a console box, a luggage floor board, and a display housing such as a car navigation.

Examples of medical instruments include application to artificial hands and artificial legs.

## Examples

Hereinafter, the present invention will be specifically described with reference to Examples, but the present invention is not limited thereto. In the examples, "parts" or"%" is used, but unless otherwise specified, it indicates "parts by mass" or "% by mass".

Example 1

«Preparation of Resin constituting Resin Composition»

According to the foregoing synthesis examples, the following resins were prepared: Cellulose derivative-A, Exemplified Compound 1, Exemplified Compound 13, Exemplified Compound 16, Exemplified Compound 18, Exemplified Compound 21, Exemplified Compound 24, Exemplified Compound 37, Exemplified Compound 38, Exemplified

Compound 40, Exemplified Compound 43, Exemplified Compound 44, Exemplified Compound 55, Exemplified Compound 58, Exemplified Compound 60, Exemplified Compound 61, Exemplified Compound 66, Exemplified Compound 71, Exemplified Compound 75, Exemplified Compound 76, Exemplified Compound 77, Exemplified Compound 86, Exemplified Compound 89, Exemplified Compound 91, Exemplified Compound 94, Exemplified Compound 95, Exemplified Compound 97, Exemplified Compound 114, Exemplified Compound 111, Exemplified Compound 115, and Exemplified Compound 117.

«Preparation of Test plate»

Using the resin prepared by the above method, a resin composition was prepared, and then each test plate was prepared.

[Preparation of Test plate TP- X]

(Preparation of Resin Composition)

| | |
|---|---|
| Resin component: | Cellulosic derivative-A: 91 parts by mass |
| Plasticizer: | Pentaerythritol tetraacetyl salicylate (abbreviation: PETAS, see Synthetic methods below): 8 parts by mass |
| Antioxidant: | IRGANOX 1010 (manufactured by BASF Japan Co., Ltd., abbreviation: I1010): 0.5 Part by mass |
| Light stabilizer: | TINUBIN 144 ((manufactured by BASF Japan, abbreviation: T144): 0.5 Part by mass |

Each of the above constituent materials was sequentially charged into a hopper of a Xplore MC15 small kneader (manufactured by Xplore Instruments Co., Ltd.), and powder was fed from a hopper into a screw, and melt-kneaded under conditions of 200 °C, 130 rpm, and for 5 minutes to prepare a resin composition, and then the resin composition was moved to a cylinder (200 °C) of an injection molding machine (manufactured by Xplore Instruments Co., Ltd.). After setting the cylinder in the injection molding machine, injection molded into a mold at 60 °C, to produce a plate-shaped Test plate TP-X having a length 80 mm, width 10 mm, a thickness of 8 mm

(Plasticizer: Synthesis of Pentaerythritol tetraacetyl salicylate (abbreviation: PETAS))

As a plasticizer, pentaerythritol tetraacetyl salicylate was synthesized with reference to the method described in Chem. Abstr. 64, p. 9810h.

In the reaction vessel, 136 parts by mass of pentaerythritol, 1070 parts by mass of phenyl salicylate, and 7 parts by mass of potassium carbonate were added, and the mixture was heated under 13.3 kPa at 155 °C for 3 hours, and then 375 parts by mass of phenol was distilled off.

Then, the reaction vessel was returned to normal pressure, and then cooled to 100 °C, 1 part by mass of concentrated sulfuric acid, 450 parts by mass of acetic anhydride were added, and the mixture was stirred at 100 °C for 1 hour. After completion of the reaction, 2000 parts by mass of toluene was added and ice-cooled to produce white crystals. The produced white crystals were filtered and washed with pure water twice, and then dried under reduced pressure at 40 °C under vacuum to obtain 667 parts by mass (yield: 85%) of pentaerythritol tetraacetyl salicylate as white crystals. The resulting white crystals had a melting point of 47 °C.

[Preparation of Test plate TP-A]

In the preparation of the Test plate TP-X, a plate-shaped Test plate TP-A having a length of 80 mm, a width of 10 mm, and a thickness of 4 mm was produced in the same manner except that the size of the mold for producing the test plate was changed to a length of 80 mm, a width of 10 mm, and a thickness of 4 mm

[Preparation of Test plate TP-1-1]

In the preparation of the resin composition of the above Test plate TP-A, a plate-shaped Test plate TP-1-1 having a length of 80 mm, a width of 10 mm, and a thickness of 4 mm was prepared in the same manner as in the preparation except that cellulose derivative-A was changed to Exemplified Compound 1 which is a cellulose derivative as a resin component.

[Preparation of Test plates TP-1-2 to TP-1-5]

In the preparation of the Test plate TP-1-1 described above, as shown in Table I, plate-shaped Test plates TP-1-2 to TP-1-5 having a length of 80 mm, a width of 10 mm, and a thickness of 4 mm were prepared in the same manner as in Table I, except that Exemplified Compound 1 was changed to Exemplified Compound 18, 13, 16, and 21, respectively, as a resin composition.

[Preparation of Test plates TP-2-1 to TP-2-5]

In the preparation of the Test plate TP-1-1 described above, as shown in Table I, plate-shaped Test plates TP-2-1 to TP-2-5 having a length of 80 mm, a width of 10 mm, and a thickness of 4 mm were prepared in the same manner as in Table I, except that Exemplified Compound 1 was changed to Exemplified Compound 24, 38, 37, 40, and 43, respectively, as a resin composition.

[Preparation of Test plates TP-3-1 to TP-3-5]

In the preparation of the Test plate TP-1-1 described above, as shown in Table I, plate-shaped Test plates TP-3-1 to TP-3-5 having a length of 80 mm, a width of 10 mm, and a thickness of 4 mm were prepared in the same manner as in Table I, except that Exemplified Compound 1 was changed to Exemplified Compound 44, 58, 55, 60, and 61, respectively, as a resin composition.

[Preparation of Test plates TP-4-1 to TP-4-5]

In the preparation of the Test plate TP-1-1 described above, as shown in Table I, plate-shaped Test plates TP-4-1 to TP-4-5 having a length of 80 mm, a width of 10 mm, and a thickness of 4 mm were prepared in the same manner as in Table I, except that Exemplified Compound 1 was changed to Exemplified Compound 86, 91, 89, 94, and 95, respectively, as a resin composition.

[Preparation of Test plates TP-5-1 to TP-5-5]

In the preparation of the Test plate TP-1-1 described above, as shown in Table I, plate-shaped Test plates TP-5-1 to TP-5-5 having a length of 80 mm, a width of 10 mm, and a thickness of 4 mm was prepared in the same manner as in Table I, except that Exemplified Compound 1 was changed to Exemplified Compound 66, 71, 75, 76, and 77, respectively, as a resin composition.

[Preparation of Test plates TP-6-1 to TP-6-5]

In the preparation of the Test plate TP-1-1 described above, as shown in Table I, plate-shaped Test plates TP-6-1 to TP-6-5 having a length of 80 mm, a width of 10 mm, and a thickness of 4 mm was prepared in the same manner as in Table I, except that Exemplified Compound 1 was changed to Exemplified Compound 97, 114, 111, 115, and 117, respectively, as a resin composition.

«Preparation of Molded body»

[Preparations for Molded body ST-101: Comparative Example]

A single Test plate TP-X having a length of 80 mm, a width of 10 mm, and a thickness of 8 mm produced as described above was used as a Molded body ST-101.

[Preparation of Molded bodies ST-102, ST-130: Comparative Examples]

Several drops of dichloromethane were dropped by a dropper onto the Test plate TP-A having a length of 80 mm, a width of 10 mm, and a thickness of 4 mm produced as described above, and then the Test plate TP-A having a length of 80 mm, a width of 10 mm, and a thickness of 4 mm was immediately attached to each other to produce Molded body ST-102 in which two test plates were laminated. A molded body ST-130 was produced in the same manner.

[Preparation of Molded body ST-103: Present Invention]

After dropping several drops of dichloromethane with a dropper onto the Test plate TP-1-1 having a length of 80 mm, a width of 10 mm, and a thickness of 4 mm thus produced, a Test plate TP-2-2 having a length of 80 mm, a width of 10 mm, and a thickness of 4 mm was attached to each other to produce Molded body ST-103 in which two test plates were laminated.

[Preparation of Molded bodies ST-104 to ST-129, ST-131 to ST-138: Present Invention]

In the preparation of the above-mentioned Molded body ST-103, Molded bodies ST-104 to ST-129, ST-131 to ST-138 in which two test plates were laminated were prepared in the same manner except that the Test plates TP-1-1 and TP-2-2 were respectively changed to the combinations of the test plates listed in Table I.

«Curing treatment of Molded bodies»

(Curing treatment of Molded bodies ST-101 to ST-129)

The above-prepared Molded bodies ST-101 to ST-129 were charged into an oven at 100 °C, taken out after 10 hours, and allowed to cool to room temperature.

(Curing treatment of Molded bodies ST-130 to ST-138)

The above-produced Molded bodies ST-130 to ST-138 were cured by adjusting a 365 nm UV light source (2000 $mW/cm^2$) to a distance of 10 cm and irradiating them at 60 °C for 3 hours.

«Evaluation of Molded bodies»

(Measurement of Strength)

For the Molded bodies ST-101 to 138 prepared above, by using TENSIRON (ORIENTEC RTC-1250A, manufactured by A&D Co., Ltd.) under the conditions of the gap-to-gap distance 64 mm and the indentation rate 2 mm/min (MPa), the bending strength was measured. The strength (MPa) of the Molded body ST-101 composed of the Test plate TP-X alone was set as a reference (100%), the relative value of the strength of each molded body to the standard was obtained, and the strength against stress from the above of the molded body was evaluated according to the criteria below.
AA: 100% or more of the strength of the Test plate TP-X (Molded body ST-101)
BB: 75% or more and less than 100% of the strength of the Test plate TP-X (Molded body ST-101)
CC: 50% or more and less than 75% of the strength of the Test plate TP-X (Molded body ST-101)
DD: Less than 50% of the strength of the Test plate TP-X (Molded body ST-101)

(Strength after Forced degradation treatment)

The Molded bodies ST-101 to ST-129 prepared above was charged into an oven at 100 °C, taken out after 10 hours, and allowed to cool to room temperature, after placing for 1 week in an environment of 60 °C and 90 %RH, they were kept in a humidity control environment of 23 ± 3 °C and 55 ± 3 %RH for 1 hour or more, strength measurement was carried out in the same manner as described above.
On the other hand, the Molded bodies ST-130 to ST-138 were irradiated with a 365 nm UV light source (2000 $mW/cm^2$) at a distance of 10 cm for 3 hours at 60 °C, and then with a 365 nm UV light source (2000 $mW/cm^2$) at a distance of 10 cm at 60 °C and 90 %RH for 6 hours. Thereafter, they were kept in a humidity control environment of 23 ± 3 °C and 55 ± 3 %RH for 1 hour or more, and strength measurement was performed by the same method as described above.
Next, in the same manner as described above, the strength after the forced degradation treatment (MPa) of the Molded body ST-101 composed of the test plates TP-X alone was set as the standard (100%), and the relative value of the strength of each molded body to the standard was obtained, and it was evaluated according to the same standard as described above.
: The results obtained as described above are shown in Table I.

Table I

| Molded body No. | Plate laminate composition | | | | Evaluation results | | Remarks |
|---|---|---|---|---|---|---|---|
| | Laminate 1 | | Laminate 2 | | Strength (MPa) | | |
| | Test plate No. | Resin composition (∗1) | Test plate No. | Resin composition (∗1) | Before forced degradation treatment | After forced degradation treatment | |
| ST-101 | TP-X | *2 | - | - | Standard | Standard | *3 |
| ST-102 | TP-A | *2 | TP-A | *2 | DD | DD | *3 |
| ST-103 | TP-1-1 | 1 | TP-2-2 | 38 | AA | AA | *4 |
| ST-104 | TP-1-2 | 18 | TP-2-4 | 40 | BB | AA | *4 |
| ST-105 | TP-1-3 | 13 | TP-2-1 | 24 | AA | AA | *4 |
| ST-106 | TP-1-4 | 16 | TP-2-3 | 37 | BB | BB | *4 |
| ST-107 | TP-1-5 | 21 | TP-2-5 | 43 | AA | AA | *4 |
| ST-108 | TP-1-5 | 21 | TP-2-3 | 37 | AA | AA | *4 |
| ST-109 | TP-1-4 | 16 | TP-2-5 | 43 | BB | AA | *4 |
| ST-110 | TP-A | *2 | TP-2-1 | 24 | CC | CC | *4 |
| ST-111 | TP-2-1 | 24 | TP-2-1 | 24 | CC | CC | *4 |
| ST-112 | TP-2-2 | 38 | TP-2-5 | 43 | CC | BB | *4 |
| ST-113 | TP-1-1 | 1 | TP-3-3 | 55 | AA | AA | *4 |
| ST-114 | TP-1-2 | 18 | TP-3-1 | 44 | AA | AA | *4 |
| ST-115 | TP-1-3 | 13 | TP-3-4 | 60 | AA | AA | *4 |
| ST-116 | TP-1-4 | 16 | TP-3-2 | 58 | BB | AA | *4 |
| ST-117 | TP-1-5 | 21 | TP-3-5 | 61 | AA | AA | *4 |
| ST-118 | TP-1-5 | 21 | TP-3-4 | 60 | BB | BB | *4 |
| ST-119 | TP-1-1 | 1 | TP-3-5 | 61 | AA | BB | *4 |
| ST-120 | TP-A | *2 | TP-3-1 | 44 | CC | CC | *4 |
| ST-121 | TP-3-2 | 58 | TP-3-2 | 58 | CC | BB | *4 |

(continued)

| Molded body No. | Plate laminate composition | | | | Evaluation results | | Remarks |
|---|---|---|---|---|---|---|---|
| | Laminate 1 | | Laminate 2 | | Strength (MPa) | | |
| | Test plate No. | Resin composition (*1) | Test plate No. | Resin composition (*1) | Before forced degradation treatment | After forced degradation treatment | |
| ST-122 | TP-3-3 | 55 | TP-3-5 | 61 | CC | CC | *4 |
| ST-123 | TP-4-1 | 86 | TP-5-4 | 76 | AA | AA | *4 |
| ST-124 | TP-4-2 | 91 | TP-5-3 | 75 | AA | AA | *4 |
| ST-125 | TP-4-3 | 89 | TP-5-2 | 71 | BB | AA | *4 |
| ST-126 | TP-4-4 | 94 | TP-5-1 | 66 | BB | AA | *4 |
| ST-127 | TP-4-5 | 95 | TP-5-5 | 77 | AA | AA | *4 |
| ST-128 | TP-4-5 | 95 | TP-5-2 | 71 | AA | AA | *4 |
| ST-129 | TP-4-3 | 89 | TP-5-5 | 77 | AA | AA | *4 |
| ST-130 | TP-A | *2 | TP-A | *2 | DD | DD | *4 |
| ST-131 | TP-6-1 | 97 | TP-6-1 | 97 | AA | AA | *4 |
| ST-132 | TP-6-2 | 114 | TP-6-4 | 115 | BB | BB | *4 |
| ST-133 | TP-6-3 | 111 | TP-6-2 | 114 | AA | AA | *4 |
| ST-134 | TP-6-4 | 115 | TP-6-3 | 111 | BB | AA | *4 |
| ST-135 | TP-6-5 | 117 | TP-6-5 | 117 | AA | AA | *4 |
| ST-136 | TP-6-5 | 117 | TP-6-1 | 97 | AA | AA | *4 |
| ST-137 | TP-6-2 | 114 | TP-6-5 | 117 | AA | AA | *4 |
| ST-138 | TP-A | *2 | TP-6-1 | 97 | CC | CC | *4 |
| *1: Resin composition Exemplified Compound No. *2: Cellulose derivative-A<br>*3: Comparative Example *4:Present Invention | | | | | | | |

As is apparent from the results described in Table I, it can be seen that a molded body prepared using a cellulose derivative having a substituent represented by Formula (1) according to the present invention in at least one of the resin compositions has improved strength against stress from above with respect to the comparative example. In particular, it can be seen that the modeled body prepared by using the cellulose derivative having the substituent represented by Formula (1) according to the present invention in both of the two test plates exhibits a particularly excellent effect. Further,

it can be seen that the molded body of the present invention maintains excellent strength even after the forced deterioration treatment is performed.

Example 2

«Preparation of Filament for forming molded body»

[Preparation of Filament FI-A]

Using a Labo PLAST Mill Micro (manufactured by Toyo Seiki Co.), the temperatures of the die, cylinder 1 and cylinder 2 were set to 220 °C, respectively, and the screw rotation speed was set to 18 rpm. The rotational speed of the powder feeder was set to 20 rpm and the winding speed was set to 2.3 m/min.

(Preparation of Resin compositions for preparation of Filament FI-A]

Resin component: Cellulosic derivative-A: 91 parts by mass
Plasticizer: Pentaerythritol tetraacetyl salicylate (abbreviation: PETAS, supra): 8 parts by mass
Antioxidant: IRGANOX 1010 (manufactured by BASF Japan Co., Ltd., abbreviation: I1010): 0.5 parts by mass
Light stabilizer: TINUBIN 144 (BASF Japan, abbreviated: T144): 0.5 Part by mass
The above composition for producing Filament FI-A was charged into a powder feeder, heated to 220 °C, and Filament FI-A having a diameter of 1.75 mm was produced.

[Preparation of Filament FI-1-1]

In the preparation of the Filament FI-A described above, Filament FI-1-1 having a diameter of 1.75 mm was prepared in the same manner as in the above preparation except that cellulose derivative-A was changed to Exemplified Compound 1 which is a cellulose derivative as a resin component.

[Preparation of Filaments FI-1-2 to FI-1-5]

In the preparation of the Filament FI-1-1 described above, as shown in Table II, Filaments FI-1-2 to FI-1-5 having a diameter of 1.75 mm were prepared in the same manner as in Table II, except that Exemplified Compound 1 was changed to Exemplified Compound 18, 13, 16, and 21, respectively, as a resin composition.

[Preparation of Filaments FI-2-1 to FI-2-5]

In the preparation of the Filament FI-1-1 described above, as shown in Table II, Filaments FI-2-1 to FI-2-5 having a diameter of 1.75 mm were prepared in the same manner as in Table II, except that Exemplified Compound 1 was changed to Exemplified Compound 24, 38, 37, 40, and 43, respectively, as a resin composition.

[Preparation of Filaments FI-3-1 to FI-3-5]

In the preparation of the Filament FI-1-1 described above, as shown in Table II, Filaments FI-3-1 to FI-3-5 having a diameter of 1.75 mm were prepared in the same manner as in Table II, except that Exemplified Compound 1 was changed to Exemplified Compound 44, 58, 55, 60, and 61, respectively, as a resin composition.

[Preparation of Filaments FI-4-1 to FI-4-5]

In the preparation of the Filament FI-1-1 described above, as shown in Table II, Filaments FI-4-1 to FI-4-5 having a diameter of 1.75 mm were prepared in the same manner as in Table II, except that Exemplified Compound 1 was changed to Exemplified Compound 86, 91, 89, 94, and 95, respectively, as a resin composition.

[Preparation of Filaments FI-5-1 to FI-5-5]

In the preparation of the Filament FI-1-1 described above, as shown in Table II, Filaments FI-5-1 to FI-5-5 having a diameter of 1.75 mm was prepared in the same manner as in Table II, except that Exemplified Compound 1

was changed to Exemplified Compound 66, 71, 75, 76, and 77, respectively, as a resin composition.

[Preparation of Filaments FI-6-1 to FI-6-5]

In the preparation of the Filament FI-1-1 described above, as shown in Table II, Filaments FI-6-1 to FI-6-5 having a diameter of 1.75 mm were prepared in the same manner as in Table II, except that Exemplified Compound 1 was changed to Exemplified Compound 97, 114, 111, 115, and 117, respectively, as a resin composition.

«Preparation of Molded bodies (Filament laminates)»

[Preparation of Molded bodies FP-201, FP-229: Comparative Examples]

STL Data for producing a molded body having a length of 80 mm, a width of 10 mm, and a thickness of 4 mm by CAD was read into a two-head type hot melt lamination printer (hereinafter also referred to as a FDM printer) Value 3D MagiX MF-2200D (manufactured by Muto Kogyo Co., Ltd.), and Filament FI-A was set in each of the two heads. Molding was carried out at a table temperature of 100 °C and stacking pitch alternately 0.19 mm, to produce Molded body FP-201 having a length 80 mm, width 10 mm, a thickness of 4 mm Molded body FP-229 was produced in the same manner.

[Preparation of Molded body FP-202]

In the preparation of the Molded body FP-201 described above, Filament FI-1-1 was set in one head of a Value 3D MagiX MF-2200D (manufactured by Mutoh Kogyo Co., Ltd.), and Filament FI-2-2 was set in the other head. Molding was carried out at a table temperature of 100 °C and stacking pitch alternately 0.19 mm, to produce Molded body FP-202 having a length 80 mm, width 10 mm, a thickness of 4 mm

[Preparation of Molded bodies FP-203 to FP-228, FP-230 to FP-237]

In the preparation of the Molded body FP-202 described above, Molded bodies FP-203 to FP-228, FP-230 to FP-237 in which 2 filaments were laminated were prepared in the same manner except that the filaments to be mounted on the 2 heads of Value 3D MagiX MF-2200D (manufactured by Muto Kogyo Co., Ltd.) were changed to the combination of the filaments described in Table II, respectively.

«Curing treatment of Molded bodies (Filament laminates)»

(Curing treatment of Molded bodies FP-201 to FP-228)

The formed Molded bodies FP-201 to FP-228 as describe above were put into an oven at 100 °C, taken out after 10 hours, and allowed to cool to room temperature.

(Curing treatment of Molded bodies FP-229 to FP-237 of the shaped object)

The formed Molded bodies FP-229 to FP-237 as describe above were cured by adjusting a 365 nm UV light source (2000 mW/cm$^2$) to a distance of 10 cm and irradiating them at 60 °C for 3 hours.

«Evaluate of Molded bodies»

(Measurement of Strength)

The bending strength (MPa) of the above-produced Molded bodies FP-201 to FP-237 was measured using TENSIRON (ORIENTEC RTC-1250A, manufactured by A&D Co., Ltd.) under the conditions of a gap-to-gap spacing of 64 mm and a pushing speed of 2 mm/min. The strength (MPa) of the Molded body FP-201 composed of only the filament FI-A was used as a standard (100%), and the strength of each molded body relative to the strength of the standard was obtained, and the strength of each molded body formed by the filament relative to the stress from the above was evaluated according to the standard described below.
Level 3: 120% or more of the strength of the Molded body FP-201

Level 2: 110% or more and less than 120% of the strength of the Molded body FP-201
Level 1: 100% or more and less than 110% of the strength of the Molded body FP-201
Level 0: Less than 100% of the strength of the Molded body FP-201

(Strength after Forced degradation treatment)

The Molded bodies FP-201 to FP-228 prepared above was charged into an oven at 100 °C, taken out after 10 hours, and allowed to cool to room temperature, after placing for 1 week in an environment of 60 °C and 90 %RH, they were kept in a humidity control environment of 23 ± 3 °C and 55 ± 3 %RH for 1 hour or more, and strength measurement was performed by the same method as described above.

On the other hand, the Molded bodies FP-229 to FP-237 were irradiated with a 365 nm UV light source (2000 mW/cm$^2$) at a distance of 10 cm for 3 hours at 60 °C, and then with a 365 nm UV light source (2000 mW/cm$^2$) at a distance of 10 cm at 60 °C and 90 %RH for 6 hours. Thereafter, they were kept in a humidity control environment of 23 ± 3 °C and 55 ± 3 %RH for 1 hour or more, and strength measurement was performed by the same method as described above.

Next, in the same manner as described above, the strength (MPa) after the forced degradation treatment of the Molded body FP-201 composed of the filamentary FI-A alone was set as a standard (100%), and the relative value of the strength of each molded body to the strength (MPa) of the standard was obtained, and it was evaluated according to the same standard as described above.

The results obtained as described above are shown in Table II.

Table II

| Molded body No. | Filament laminate composition | | | | Evaluation results | | Remarks |
|---|---|---|---|---|---|---|---|
| | Laminate 1 | | Laminate 2 | | Strength (MPa) | | |
| | Filament No. | Resin composition (∗1) | Filament No. | Resin Composition (∗1) | Before forced degradation treatment | After forced degradation treatment | |
| FP-201 | FI-A | *2 | FI-A | *2 | Standard | 0 | *3 |
| FP-202 | FI-1-1 | 1 | FI-2-2 | 38 | 2 | 3 | *4 |
| FP-203 | FI-1-2 | 18 | FI-2-4 | 40 | 2 | 2 | *4 |
| FP-204 | FI-1-3 | 13 | FI-2-1 | 24 | 3 | 3 | *4 |
| FP-205 | FI-1-4 | 16 | FI-2-3 | 37 | 3 | 3 | *4 |
| FP-206 | FI-1-5 | 21 | FI-2-5 | 43 | 3 | 3 | *4 |
| FP-207 | FI-1-5 | 21 | FI-2-3 | 37 | 3 | 3 | *4 |
| FP-208 | FI-1-4 | 16 | FI-2-5 | 43 | 2 | 3 | *4 |
| FP-209 | FI-A | *2 | FI-2-1 | 24 | 1 | 1 | *4 |
| FP-210 | FI-2-1 | 24 | FI-2-1 | 24 | 2 | 2 | *4 |
| FP-211 | FI-2-2 | 38 | FI-2-5 | 43 | 1 | 1 | *4 |
| FP-212 | FI-1-1 | 1 | FI-3-3 | 55 | 3 | 3 | *4 |
| FP-213 | FI-1-2 | 18 | FI-3-1 | 44 | 3 | 3 | *4 |
| FP-214 | FI-1-3 | 13 | FI-3-4 | 60 | 2 | 3 | *4 |
| FP-215 | FI-1-4 | 16 | FI-3-2 | 58 | 2 | 2 | *4 |
| FP-216 | FI-1-5 | 21 | FI-3-5 | 61 | 3 | 3 | *4 |
| FP-217 | FI-1-5 | 21 | FI-3-4 | 60 | 2 | 2 | *4 |
| FP-218 | FI-1-1 | 1 | FI-3-5 | 61 | 3 | 3 | *4 |
| FP-219 | FI-A | *2 | FI-3-1 | 44 | 1 | 1 | *4 |
| FP-220 | FI-3-2 | 58 | FI-3-2 | 58 | 1 | 1 | *4 |

(continued)

| Molded body No. | Filament laminate composition | | | | Evaluation results | | Remarks |
|---|---|---|---|---|---|---|---|
| | Laminate 1 | | Laminate 2 | | Strength (MPa) | | |
| | Filament No. | Resin composition (∗1) | Filament No. | Resin Composition (∗1) | Before forced degradation treatment | After forced degradation treatment | |
| FP-221 | FI-3-3 | 55 | FI-3-5 | 61 | 2 | 2 | *4 |
| FP-222 | FI-4-1 | 86 | FI-5-4 | 76 | 2 | 3 | *4 |
| FP-223 | FI-4-2 | 91 | FI-5-3 | 75 | 3 | 3 | *4 |
| FP-224 | FI-4-3 | 89 | FI-5-2 | 71 | 2 | 2 | *4 |
| FP-225 | FI-4-4 | 94 | FI-5-1 | 66 | 2 | 3 | *4 |
| FP-226 | FI-4-5 | 95 | FI-5-5 | 77 | 3 | 3 | *4 |
| FP-227 | FI-4-5 | 95 | FI-5-2 | 71 | 2 | 2 | *4 |
| FP-228 | FI-4-3 | 89 | FI-5-5 | 77 | 3 | 3 | *4 |
| FP-229 | FI-A | *2 | FI-A | *2 | Standard | 0 | *3 |
| FP-230 | FI-6-1 | 97 | FI-6-1 | 97 | 3 | 3 | *4 |
| FP-231 | FI-6-2 | 114 | FI-6-4 | 115 | 2 | 2 | *4 |
| FP-232 | FI-6-3 | 111 | FI-6-2 | 114 | 3 | 3 | *4 |
| FP-233 | FI-6-4 | 115 | FI-6-3 | 111 | 3 | 3 | *4 |
| FP-234 | FI-6-5 | 117 | FI-6-5 | 117 | 2 | 3 | *4 |
| FP-235 | FI-6-5 | 117 | FI-6-1 | 97 | 3 | 3 | *4 |
| FP-236 | FI-6-2 | 114 | FI-6-5 | 117 | 3 | 3 | *4 |
| FP-237 | FI-A | *2 | FI-6-1 | 97 | 1 | 1 | *4 |
| *1: Resin composition Exemplified Compound No. *2: Cellulose derivative-A *3: Comparative Example *4: Present Invention | | | | | | | |

As is apparent from the results described in Table II, it can be seen that a molded body prepared using a cellulose derivative or an ABS derivative having a substituent represented by Formula (1) according to the present invention in at least one of the laminates has improved strength against stress from the above with respect to the comparative example. In particular, it can be seen that a modeled body prepared by using a cellulose derivative or an ABS derivative having a substituent represented by Formula (1) according to the present invention in both of the two filaments exhibits a particularly excellent effect. Further, it can be seen that the molded body of the present invention maintains excellent strength even after the forced deterioration treatment is performed.

## Industrial Applicability

The resin composition of the present invention is a resin composition having excellent transparency, high rigidity, and heat resistance, it may be used in a wide range of fields as a three-dimensional laminate for a 3D printer, electrical and electronic equipment and its components, OA equipment, information terminal equipment, mechanical components, home appliances, vehicle components, medical instruments, building members, various containers, leisure goods and miscellaneous goods, various applications such as lighting equipment useful, in particular, it may be suitably used for electric and electronic equipment, vehicle members and medical instruments.

## Claims

**1.** A resin composition used for forming a molded body by a hot melt extrusion method,

wherein the resin composition contains a resin including a polymer body having a partial structure represented by the following Formula (1),

**Formula (1)** $-(X)_n-J-A$

in Formula (1), X represents -C(=O)-, -C(=O)NH-, $-SiR_1R_2-$, or -S-; $R_1$ and $R_2$ each represents a substituent; J represents a linking group; A represents a functional group; and n represents 1 or 0.

**2.** The resin composition described in claim 1,
wherein A in Formula (1) represents a nitrile oxide group, a vinyl group, a thiol group, a franc ring group, a maleimide ring group, or a cinnamic acid residual.

**3.** The resin composition described in claim 1 or 2,
wherein the polymer constituting the resin is a cellulose derivative or a styrene-butadiene-acrylonitrile copolymer.

**4.** A filament material used for forming a molded body by a hot melt extrusion method,
wherein the filament material includes the resin composition described in any one of claims 1 to 3.

**5.** A three-dimensional laminate having two or more layers including a molded body forming material,
wherein at least one layer among the layers including the molded body forming material includes the resin composition described in any one of claims 1 to 3.

**6.** The three-dimensional laminate described in claim 5,
wherein all of the layers including the molded body forming material are layers including the resin composition described in any one of claims 1 to 3.

**7.** A method of manufacturing a three-dimensional laminate described in claim 5 or 6 by a hot melt extrusion method, comprising at least the steps of:

forming a first molded body;
forming a second molded body;
laminating the second molded body on the first molded body to form a laminate body; and
applying a curing treatment to the laminate body.

## INTERNATIONAL SEARCH REPORT

International application No.
PCT/JP2020/030126

**A. CLASSIFICATION OF SUBJECT MATTER**

C08L 101/02(2006.01)i; B29C 64/118(2017.01)i; B32B 23/04(2006.01)i; B32B 27/30(2006.01)i; B33Y 10/00(2015.01)i; B33Y 70/00(2020.01)i; B33Y 80/00(2015.01)i

FI: C08L101/02; B32B23/04; B32B27/30 B; B33Y70/00; B33Y80/00; B29C64/118; B33Y10/00

According to International Patent Classification (IPC) or to both national classification and IPC

**B. FIELDS SEARCHED**

Minimum documentation searched (classification system followed by classification symbols)

C08L1/00-101/14; C08K3/00-13/08; B29C64/118; B32B23/04; B32B27/30; B33Y10/00; B33Y70/00; B33Y80/00; C08F6/00-246/00; C08F301/00; C08C19/00-19/44

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-001061 A (KURARAY CO., LTD.) 06 January 2011 (2011-01-06) claim 10, paragraphs [0060], [0072]-[0076], [0097]-[0098], [0104]-[0106], synthesis example 1, example 1 | 1-2,5<br>3-4,6-7 |
| X<br>A | JP 2010-285598 A (DAICEL POLYMER LTD.) 24 December 2010 (2010-12-24) claim 1, paragraphs [0022], [0039]-[0049], table 1, example 13 | 1,3<br>3,4-7 |
| A | JP 2014-217948 A (KONICA MINOLTA, INC.) 20 November 2014 (2014-11-20) entire text | 1-7 |
| A | JP 2007-231050 A (DICEL CHEMICAL INDUSTRIES, LTD.) 04 October 2007 (2007-10-04) entire text | 1-7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 October 2020 (14.10.2020) | 27 October 2020 (27.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/030126

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-231050 A (DICEL CHEMICAL INDUSTRIES, LTD.) 13 September 2007 (2007-09-13) entire text | 1-7 |
| A | WO 2011/045918 A1 (NIPPON SODA CO., LTD.) 21 April 2011 (2011-04-21) entire text | 1-7 |
| A | JP 08-217851 A (TOSHIBA CHEM CORP.) 27 August 1996 (1996-08-27) entire text | 1-7 |
| A | JP 2016-011413 A (SANYO CHEMICAL INDUSTRIES, LTD.) 21 January 2016 (2016-01-21) entire text | 1-7 |
| A | JP 2012-503682 A (DOW GLOBAL TECHNOLOGIES LLC) 09 February 2012 (2012-02-09) entire text | 1-7 |
| A | WO 2019/107450 A1 (MITSUBISHI CHEMICAL CORPORATION) 06 June 2019 (2019-06-06) entire text | 1-7 |

Form PCT/ISA/210 (continuation of second sheet) (January 2015)

**INTERNATIONAL SEARCH REPORT**
Information on patent family members

International application No.
PCT/JP2020/030126

| Patent Documents referred in the Report | Publication Date | Patent Family | Publication Date |
|---|---|---|---|
| JP 2011-001061 A | 06 Jan. 2011 | WO 2009/051155 A1 | |
| JP 2010-285598 A | 24 Dec. 2010 | US 2012/0071601 A1<br>claim 1, paragraphs [0039], [0057]-[0103], table 1-1, example 13<br>WO 2010/131730 A1<br>EP 2431418 A1<br>TW 201100506 A<br>CN 102421847 A | |
| JP 2014-217948 A | 20 Nov. 2014 | WO 2013/031074 A1 | |
| JP 2007-254707 A | 04 Oct. 2007 | WO 2007/099769 A1<br>KR 10-2008-0096600 A<br>TW 200740862 A | |
| JP 2007-231050 A | 13 Sep. 2007 | (Family: none) | |
| WO 2011/045918 A1 | 21 Apr. 2011 | US 2012/0202910 A1<br>entire text<br>EP 2476710 A1<br>CN 102549023 A<br>KR 10-2012-0061966 A | |
| JP 08-217851 A | 27 Aug. 1996 | (Family: none) | |
| JP 2016-011413 A | 21 Jan. 2016 | (Family: none) | |
| JP 2012-503682 A | 09 Feb. 2012 | US 2011/0172368 A1<br>entire text<br>WO 2010/036642 A1<br>EP 2328938 B1<br>KR 10-2011-0063681 A<br>CN 102216337 A | |
| WO 2019/107450 A1 | 06 Jun. 2019 | TW 201925166 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6317791 B
- JP 9076355 A
- JP 20061922710 A
- JP 10045804 A
- JP 2017170881 A
- JP 6501040 A
- WO 5708936 A
- JP 01184479 A
- JP 461383 A
- US 4619956 A
- US 4839405 A


### Non-patent literature cited in the description


- *Green Chemistry,* 2013, vol. 15 (4), 1016
- *Chem. Lett.,* vol. 39, 420
- *Organic Letters,* 2001, vol. 3 (2), 283
- *Egyptian Journal of Chemistry,* 1993, vol. 36 (2), 149
- *Journal of Polymer Science, Part A: Polymer Chemistry,* 2014, vol. 52 (5), 728
- *Chem. Abstr.,* vol. 64, 9810h